(19) Europäisches Patentamt
European Patent Office
Office européen des brevets

(11) **EP 4 764 971 A1**

(12) **EUROPEAN PATENT APPLICATION**

(43) Date of publication:
**24.06.2026 Bulletin 2026/26**

(21) Application number: **25221987.8**

(22) Date of filing: **09.12.2025**

(51) International Patent Classification (IPC):
**G06N 10/20** (2022.01)  **G06N 10/60** (2022.01)
**G06F 17/16** (2006.01)

(52) Cooperative Patent Classification (CPC):
**G06N 10/20; G06F 17/16; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.12.2024 US 202418999281**

(71) Applicant: **Microsoft Technology Licensing, LLC
Redmond, WA 98052 (US)**

(72) Inventors:
• **SU, Yuan
Redmond, 98052 (US)**
• **KANG, Christopher Thomas
Redmond, 98052 (US)**

(74) Representative: **CMS Cameron McKenna Nabarro
Olswang LLP
Cannon Place
78 Cannon Street
London EC4N 6AF (GB)**

(54) **REDUCING QUBITS USED IN A QUANTUM COMPUTER**

(57) Aspects of the disclosure include a procedure for operating a quantum circuit. Aspects include performing Hamiltonian block encoding with unitary evolution on a first multiplicand and a second multiplicand resulting in a first intermediate operator and a second intermediate operator, respectively. Aspects include performing first gates on the first intermediate operator and second gates on the second intermediate operator resulting in a modified first intermediate operator and a modified second intermediate operator, respectively. Aspects include performing a commutator product formula to combine the modified first intermediate operator and the modified second intermediate operator resulting in a combination operator, and performing another first gates and another second gates on the combination operator resulting in a modified combination operator. The another second gates include a conjugate transpose of the another first gates. Two ancilla qubits are utilized on the quantum circuit.

FIG. 1

EP 4 764 971 A1

**Description**

The subject disclosure relates to quantum circuits, and particularly to a quantum computer and computer-implemented methods for reducing qubits used in multiplying matrices with Hamiltonian evolution, thereby reducing the number of qubits utilized in a quantum computer for this procedure.

A quantum computer is a physical machine configured to execute logical operations based on or influenced by quantum-mechanical phenomena. Such logical operations may include, for example, mathematical computation. Current interest in quantum-computer technology is motivated by analysis suggesting that the computational efficiency of an appropriately configured quantum computer may surpass that of any practicable non-quantum computer when applied to certain types of problems. Such problems include computer modeling of natural and synthetic quantum systems, predicting the behavior of new molecules and materials, integer factorization, and machine learning. Furthermore, it has been predicted that continued miniaturization of conventional computer logic structures will ultimately lead to the development of nanoscale logic components that exhibit quantum effects and should therefore be addressed according to quantum-computing principles.

SUMMARY

Embodiments of the present invention are directed to methods for reducing qubits used in multiplying matrices with Hamiltonian evolution. A non-limiting example method of a procedure for operating a quantum circuit includes performing Hamiltonian block encoding with unitary evolution on a first multiplicand and a second multiplicand resulting in a first intermediate operator and a second intermediate operator, respectively. The method includes a procedure for operating a quantum circuit intermediate operator and second gates on the second intermediate operator resulting in a modified first intermediate operator and a modified second intermediate operator, respectively. The method includes performing a commutator product formula to combine the modified first intermediate operator and the modified second intermediate operator resulting in a combination operator. The method includes performing another first gates and another second gates on the combination operator resulting in a modified combination operator, wherein the another second gates include a conjugate transpose of the another first gates, and wherein two ancilla qubits are utilized on the quantum circuit.

According to one or more embodiments, a non-limiting method of a procedure for operating a quantum circuit includes performing Hamiltonian block encoding with unitary evolution on a first multiplicand and a second multiplicand resulting in a first intermediate operator and a second intermediate operator, respectively. The method includes performing quantum operations on the second intermediate operator resulting in a modified second intermediate operator, where the quantum operations comprise tensor products associated with projection operators. The method includes performing a commutator product formula to combine the first intermediate operator and the modified second intermediate operator resulting in a combination operator. The method includes performing a first gate and a second gate on the combination operator resulting in a modified combination operator, wherein the second gate comprises a conjugate transpose of the first gate, and wherein one ancilla qubit is utilized on the quantum circuit.

The above features and advantages, and other features and advantages of the disclosure are readily apparent from the following detailed description when taken in connection with the accompanying drawings. This Summary is provided to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any or all disadvantages noted in any part of this disclosure.

BRIEF DESCRIPTION OF THE DRAWINGS

The specifics of the exclusive rights described herein are particularly pointed out and distinctly claimed in the claims at the conclusion of the specification. The foregoing and other features and advantages of the embodiments of the invention are apparent from the following detailed description taken in conjunction with the accompanying drawings in which:

FIG. 1 depicts an example quantum computer configured to execute quantum-logic operations in accordance with one or more embodiments;

FIG. 2 depicts an illustration of a Bloch sphere that provides a graphical description of some quantum mechanical aspects of an individual qubit in accordance with one or more embodiments;

FIG. 3 is a graph of example signal levels and associated durations to assert a quantum-gate operation on one or more qubits of a quantum circuit in accordance with one or more embodiments;

FIG. 4 depicts a block diagram of a classical computer system according to one or more embodiments;

FIG. 5 depicts a flowchart of a method for reducing the number of ancilla qubits used in multiplying matrices with Hamiltonian evolution in accordance with one or more embodiments;

FIGS. 6A, 6B, 6C, 6D, 6E, and 6F depict quantum circuit diagrams for multiplying generic matrices in accordance with one or more embodiments;

FIG. 7 depicts a flowchart of a method for reducing the number of ancilla qubits used in multiplying matrices with Hamiltonian evolution in accordance with one or more embodiments;

FIGS. 8A, 8B, 8C, and 8D depict quantum circuit diagrams for multiplying matrices with at least one Hermitian matrix in accordance with one or more embodiments;

FIG. 9 depicts a flowchart of a computer-implemented method for reducing qubits in a quantum circuit used in multiplying matrices with Hamiltonian evolution in accordance with one or more embodiments; and

FIG. 10 depicts a flowchart of a computer-implemented method for reducing qubits in a quantum circuit used in multiplying matrices with Hamiltonian evolution in accordance with one or more embodiments.

The diagrams depicted herein are illustrative. There can be many variations to the diagram or the operations described therein without departing from the invention. For instance, the actions can be performed in a differing order or actions can be added, deleted or modified.

In the accompanying figures and following detailed description of the described embodiments of the invention, the various elements illustrated in the figures are provided with two or three-digit reference numbers. With minor exceptions, the leftmost digit(s) of each reference number corresponds to the figure in which its element is first illustrated.

DETAILED DESCRIPTION

In accordance with one or more embodiments, a system, a method, a classical computer coupled to a quantum computer, and/or a quantum computer are configured and arranged to provide procedures for reducing qubits used in multiplying matrices with Hamiltonian evolution, which causes a state change in qubits of the quantum computer such that the states of the qubits are utilized for further quantum operations, measured, and/or output to a classical computer. The procedure reduces the number of qubits used in the quantum computer to perform these quantum operations compared to the state-of-the-art.

One or more embodiments relate to compilation and computation on quantum computer hardware. The present disclosure provides an efficient implementation of matrix arithmetic operations that underpin the speedups of many quantum algorithms executed on qubits of a quantum computer, thereby resulting in faster processing by the quantum computer. One or more embodiments disclose a process to multiply matrices encoded in the off-diagonal block of a Hamiltonian with evolutions of individual multiplicands. According to one or more embodiments, the process uses at most two additional ancilla qubits for multiplying generic matrices and only one ancilla when one of the multiplicands is Hermitian. This is in contrast with existing methods whose ancilla qubit consumption grows with the number of multiplicands. Although both the present disclosure and existing methods use the same number of primary qubits (main qubits, data qubits, system qubits, etc.) for the actual computation, the present disclosure reduces the number of ancilla qubits for the computations according to the algorithm being executed by the quantum computer. As an example application, the present disclosure solves the quantum linear system problem with a nearly optimal query complexity $\kappa \left( \frac{\kappa}{\epsilon} \right)^{o(1)}$ using

only a single ancilla qubit. Existing methods would use at least 4 ancilla qubits and complex multi-qubit controlled quantum gates to solve the same linear system problem.

As technical effects and technical solutions, one or more embodiments improve the functioning and/or operation of the quantum computer itself. Particularly, the present disclosure improves the functioning of a quantum computer by reducing qubit usage, efficiently utilizing resources, ensuring scalability, simplifying quantum circuit design, enhancing algorithm performance, and broadening the applicability of quantum algorithms. These improvements collectively contribute to making quantum computations more practical, efficient, and reliable on current and future quantum hardware. For instance, one of the example improvements is the reduction in the number of ancilla qubits required for matrix multiplication. Traditional methods for matrix multiplication on quantum computers often require a number of ancilla qubits that grows with the number of multiplicands. The present disclosure, however, uses at most two additional ancilla qubits for multiplying generic matrices and only one ancilla qubit when one of the multiplicands is Hermitian. This reduction in qubit usage is beneficial for the practical implementation of quantum algorithms, especially given the current limitations in the number of qubits available on quantum hardware.

Also, by minimizing the number of ancilla qubits, the present disclosure has the technical effect and solution of allowing for more efficient use of the available quantum resources, thereby allowing unused qubits to be available for different operations. This efficiency is particularly important for near-term quantum devices, which have limited qubit counts and coherence times. Efficient resource utilization can lead to more complex computations being performed within the constraints of existing quantum hardware.

Additionally, scalability is an advantage for quantum algorithms that involve multiple matrix multiplications, such as those used in quantum simulations, quantum linear systems, and other quantum algorithms, because the present disclosure ensures that the number of ancilla qubits remains constant and does not increase with the number of multiplicands. The ability to scale up the multiplicands without a corresponding increase in ancilla qubits makes the method more practical for large-scale quantum computations.

Further, the reduction in qubit usage and the efficient construction of quantum circuits leads to the technical effect and solution of improved performance of quantum algorithms. With fewer qubits and simpler circuits, the overall error rates can be reduced, and the fidelity of the quantum operations can be increased. This enhancement in performance is favorable in achieving accurate and reliable results in quantum computations.

Also, the ability of the present disclosure to handle both generic matrices and Hermitian matrices makes it broadly applicable to a wide range of quantum algorithms. Many quantum algorithms, such as those for solving linear systems, simulating quantum systems, and performing eigenvalue transformations, involve matrix multiplications. The versatility of the present disclosure in handling different types of matrices extends its applicability across various quantum computing applications.

Definitions:

Hamiltonian block encoding is a method used in quantum computing to represent a matrix A as a block within a larger Hermitian matrix, which corresponds to the Hamiltonian governing the evolution of a quantum system. This technique is particularly useful for implementing matrix arithmetic operations, such as matrix multiplication, on a quantum computer. In Hamiltonian block encoding, the matrix A is embedded into a larger Hermitian matrix H in such a way that A appears in one of the off-diagonal blocks. The resulting Hermitian matrix H can then be used to perform quantum operations that correspond to the original matrix A.

Evolution: In the context of quantum computing and Hamiltonian block encoding, "evolution" refers to the time-dependent change of a quantum state under the influence of a Hamiltonian operator. This process is mathematically described by the unitary evolution operator, which governs how the quantum state evolves over time.

The unitary evolution operator $U(t)$ is given by the exponential of the Hamiltonian multiplied by time. It is expressed as $U(t)=exp(-iHt)$, where $H$ is the Hamiltonian, $t$ is time, and $i$ is the imaginary unit. The unitary evolution operator is applied to the initial quantum state to obtain the state at a later time.

Hermitian dilation is a technique used in quantum computing and linear algebra to embed a general matrix into a Hermitian matrix. A Hermitian matrix is a special type of square matrix that is equal to its own conjugate transpose, meaning it has real eigenvalues and orthogonal eigenvectors. The purpose of Hermitian dilation is to embed a non-Hermitian matrix into a larger Hermitian matrix, which can then be used in various quantum algorithms and operations according to one or more embodiments. This transformation allows for the application of techniques and properties specific to Hermitian matrices, such as unitary evolution on quantum computers according to one or more embodiment.

The commutator product formula is a method used in quantum computing and quantum mechanics to approximate the combined effect of two operators when they are applied in sequence. It is particularly useful for simulating the evolution of quantum systems and for implementing complex quantum operations. The commutator product formula allows one to express the result of applying two operators in sequence as a combination of the individual operators and their commutator. The commutator of two operators is a measure of how much the two operators fail to commute, or in other words, how much the order of applying the operators matters. The commutator product formula provides a way to approximate the commutator of operators by using a series of terms that involve the original operators. This approximation becomes more accurate as more terms are included in the series.

In quantum computing, an "ancilla" (short for "ancillary qubit") refers to an additional qubit used to assist in the computation or to facilitate certain operations. Ancilla qubits are not part of the primary set of qubits that encode the main quantum information or perform the primary computation. Instead, they are used as auxiliary resources to help implement quantum gates, perform error correction, or carry out specific algorithms. Ancilla qubits can serve various purposes, including: facilitating quantum gates, error correction, state preparation and measurement, algorithmic assistance, etc.

The terms primary qubits, main qubits, data qubits, systems qubits, etc., may be utilized interchangeably. The primary qubits are the main qubits that hold the quantum information and are used to perform the core computations of a quantum algorithm. They are the qubits on which the primary quantum gates and operations are applied. The primary qubits or data qubits refer to the main qubits that encode the quantum information and perform the primary computation in a quantum algorithm. In addition to holding the quantum information, the primary qubits are directly involved in the execution of quantum operations and algorithms. The primary qubits represent the logical states and are the primary focus of the computation. The primary qubits are distinct from ancilla qubits, which serve auxiliary roles.

Instruction set architecture: The instruction set architecture (ISA) is the hardware-software interface. As long as hardware faithfully implements the ISA and software is used to express programs in terms of the ISA operations, one skilled in the art can assemble hardware and software and expect correct executions of a program. Like classical computers, quantum computers include a set of software components such as the compiler and runtime that drive the execution of a program and hardware that implements the software instructions. Quantum hardware could include instruction decoding and issue, instruction execution and measurement processing, and implementation of the logical qubit and components such as magic state distillation and the low-level qubit control systems. The ISA draws the boundary between these software and hardware components.

Quantum gates represent the operations that can be performed on qubits. A universal gate set is a set of these quantum gates that enable universal quantum computation, which means that all possible operations are enabled. The gates included in this set include both Clifford gates and non-Clifford gates.

A quantum error correcting code is defined by an isometric linear map from a Hilbert space of k qubits, called logical qubits, to a larger Hilbert space of n qubits, called the physical qubits of the code, for some integers k and n with n>k. A stabilizer quantum error correcting code is an error correcting code where the image of this map is the joint eigenspace of n-k independent, mutually commuting operators, termed stabilizers, each of which is a product of Pauli operators on one or more physical qubits.

A Calderbank, Shor, and Steane (CSS) stabilizer quantum error correcting code is a stabilizer quantum error correcting code where each stabilizer is a product of either Pauli X operators on some qubits, or Pauli Z operators, but not both.

Surface codes are a type of quantum error-correcting code that arranges qubits on a two-dimensional (2D) grid. Surface codes are known for their high fault-tolerance and ability to correct errors that occur during quantum computations.

The toric code is a topological quantum error correcting code, and an example of a stabilizer code, defined on a two-dimensional spin lattice. The toric code is the simplest and most well studied of the quantum double models. Topology is the branch of mathematics that studies the properties of objects that do not change under smooth deformations, one classic example being the number of holes in a torus.

A code block refers to a set of qubits that are used together to encode quantum information in a way that protects the quantum information from errors. In a quantum error correcting code, a block of physical qubits is used to encode a smaller number of logical qubits. In the Shor code, 9 physical qubits are utilized to encode 1 logical qubit.

A code patch is defined as a section of the two-dimensional (2D) grid that encodes a logical qubit. Each code patch includes multiple physical qubits that work together to protect the quantum information from errors. The group of physical qubits is encoded into a logical qubit such that the logical qubits are represented by these patches. The edges of the patches correspond to logical Pauli operators, which are used to perform quantum operations

Quantum compiling fills the gap between the computing layer of high-level quantum algorithms and the layer of physical qubits with their specific properties and constraints. Quantum compiling is a hybrid between the general-purpose compilers of computers, transforming high-level language to assembly language and hardware synthesis by hardware description language, where functions are automatically synthesized into customized hardware. Quantum computation takes place at its lowest level by means of physical operations described by unitary matrices acting on the state of qubits. The computation is achieved as circuits of quantum gates, which are ordered sequences of unitary operators, acting on a few qubits at once.

There is a family of Abelian topological Calderbank-Shor-Steane (CSS) stabilizer codes whose generators are few body X-type and Z-type Pauli strings associated to the stars and plaquettes, respectively, of a cellulation of a two-dimensional surface (with a qubit located at each edge of the cellulation). Toric code often either refers to the construction on the two-dimensional torus and/or is an alternative name for the general construction. The construction on surfaces with boundaries is often called the planar code. Codewords correspond to ground states of the surface code Hamiltonian, and error operators create or annihilate pairs of anyonic charges or vortices.

Quantum computing can utilize methods that suppress errors in faulty qubits. Quantum error correction is a broad class of techniques that encode "logical" qubits and gates in a subspace of the Hilbert space formed by many more "physical" qubits and gates. The structure of a quantum code has an influence on how logical gates are enacted on the physical qubits, and hence the total size and execution time of a quantum computation.

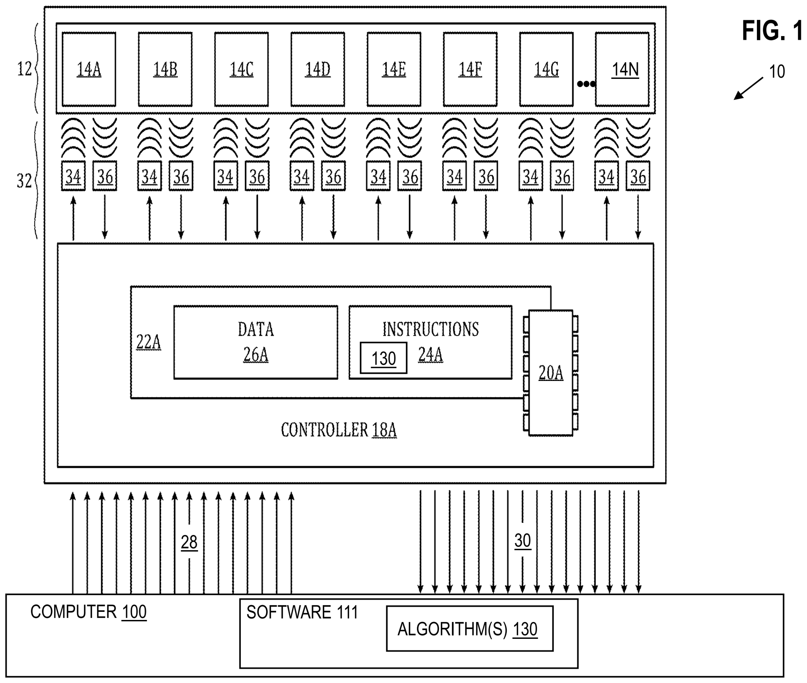

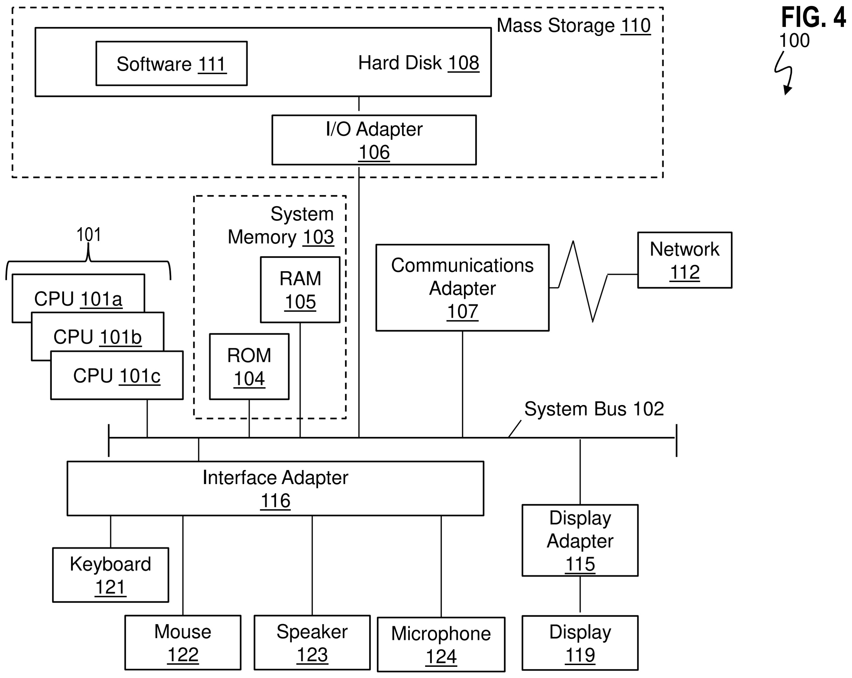

Now turning to an example quantum computer architecture, FIG. 1 illustrates an example quantum computer 10 configured to execute quantum-logic operations. While conventional computer memory holds digital data in an array of bits and enacts bit-wise logic operations, a quantum computer holds data in an array of qubits and operates quantum-mechanically on the qubits in order to implement the desired logic. Accordingly, quantum computer 10 of FIG. 1 includes at least one quantum circuit 12 having an array of physical qubits 14A, 14B, and 14C-14N, where N is the last number of qubits. The qubits 14A-14N can be referred to collectively as qubits 14. The quantum circuit 12 of the array of qubits 14 can be arranged in a lattice structure as depicted in FIG. 4.

The qubits 14 of the quantum circuit 12 take various forms, depending on the desired architecture of the quantum computer 10. According to one or more embodiments, this disclosure relates to neutral atom systems. Further, a qubit alternatively can include: a superconducting Josephson junction, a trapped ion, a trapped atom coupled to a high-finesse cavity, an atom or molecule confined within a fullerene, an ion or neutral dopant atom confined within a host lattice, a quantum dot exhibiting discrete spatial- or spin-electronic states, electron holes in semiconductor junctions entrained via an electrostatic trap, a coupled quantum-wire pair, an atomic nucleus addressable by magnetic resonance, a free electron in helium, a molecular magnet, or a metal-like carbon nanosphere, as non-limiting examples. Additionally, a qubit can include an optically trapped neutral atom such as Cs, Sr, Rb, Yb. More generally, each qubit 14 can include any particle or system of particles that can exist in two or more discrete quantum states that can be measured and manipulated experimentally. For instance, a qubit may be implemented in the plural processing states corresponding to different modes of light propagation through linear optical elements (e.g., mirrors, beam splitters and phase shifters), as well as in states accumulated within a Bose-Einstein condensate.

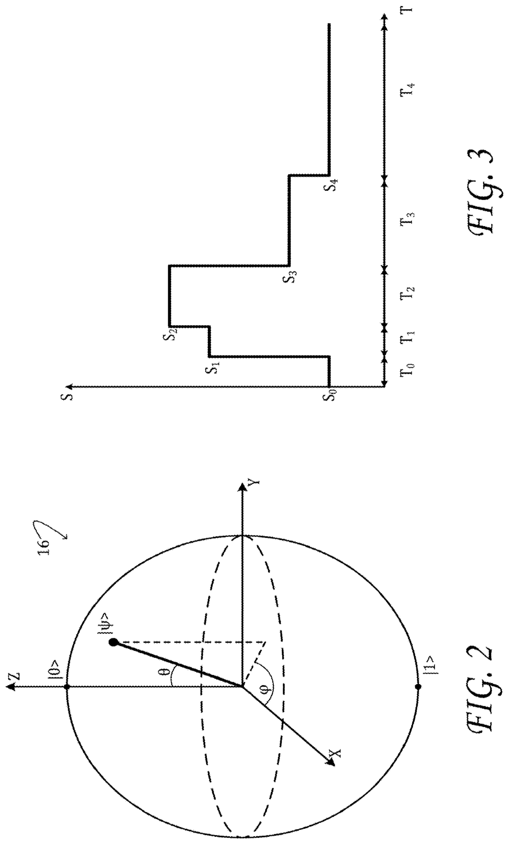

FIG. 2 is an illustration of a Bloch sphere 16 that provides a graphical description of some quantum mechanical aspects of an individual qubit 14. In this description, the north and south poles of the Bloch sphere correspond to the standard basis vectors |0> and |1>, respectively. The set of points on the surface of the Bloch sphere comprise all possible pure states |$\psi$> of the qubit, while the interior points correspond to all possible mixed states. A mixed state of a given qubit may result from decoherence, which may occur because of undesirable coupling to external degrees of freedom.

Referring to FIG. 1, quantum computer 10 includes a controller 18A. The controller 18A includes at least one processor 20A and associated computer memory 22A. The processor 20A of the controller 18A can be coupled operatively to peripheral componentry, such as network componentry, to enable the quantum computer to be operated remotely. The processor 20A of the controller 18A can take the form of a central processing unit (CPU), a graphics processing unit (GPU), or the like. As such, the controller can include classical electronic componentry. The terms 'classical' and 'non-quantum' are applied herein to any component that can be modeled accurately as an ensemble of particles without considering the quantum state of any individual particle. Classical electronic components include integrated, microlithographed transistors, resistors, and capacitors, for example. The computer memory 22A can be configured to hold program instructions 24A that cause the processor 20A to execute any function or process of the controller. The computer memory can also be configured to hold additional data 26A. In examples in which quantum circuit 12 is a low-temperature or cryogenic device, the controller 18A can include control componentry operable at low or cryogenic temperatures, for example, a field-programmable gate array (FPGA) operated at 77 kelvin (K). In such examples, the low-temperature control componentry can be coupled operatively to interface componentry operable at normal temperatures.

The controller 18A of the quantum computer 10 is configured to receive a plurality of inputs 28 and to provide a plurality of outputs 30. The inputs and outputs can each include digital and/or analog lines. At least some of the inputs and outputs can be data lines through which data is provided to and/or extracted from the quantum computer. Other inputs can include control lines via which the operation of the quantum computer can be adjusted or otherwise controlled. In one or more embodiments, the quantum computer 10 can be coupled a classical computer 100. Further, details of the example classical computer 100 are discussed in FIG. 4.

The controller 18A is operatively coupled to the quantum circuit 12 via quantum interface 32. The quantum interface 32 is configured to exchange data bidirectionally with the controller 18A. The quantum interface 32 is further configured to exchange signal corresponding to the data bidirectionally with the qubit register. Depending on the architecture of quantum computer 10, such signals may include electrical, magnetic, and/or optical signals. By the signal conveyed through the quantum interface 32, the controller 18A can interrogate and otherwise influence the quantum state held in various qubits 14. For example, the controller 18A can interrogate and otherwise influence the quantum state held in a qubit register, as defined by a collective quantum state of a group of qubits 14. The quantum interface 32 includes at least one modulator 34 and at least one demodulator 36, each coupled operatively to one or more qubits 14 of the quantum circuit 12. In one or more embodiments, a modulator 34 and a demodulator 36 can each be coupled to qubits in a qubit register. Each modulator 34 is configured to output a signal to one or more qubits 14 in the quantum circuit 12 based on modulation data received from the controller 18A. In one or more embodiments, at least one modulator 34 can output a signal to qubits in a qubit register based on modulation data received from the controller 18A. Each demodulator 36 is configured to sense a signal from the one or more qubits 14 of the quantum circuit 12 and to output data to the controller 18A based on the signal. In one or more embodiments, each demodulator 36 is configured to sense a signal from the qubit register and to output data to the controller 18A based on the signal. The data received from the demodulator 36 can, in some examples, be an estimate of an observable to the measurement of the quantum state held in one or more qubits 14 in the quantum circuit 12. In one or more embodiments, the data received from the demodulator 36 can be an estimate of an observable to the measurement of the quantum state held in the qubit register.

In some examples, the modulator 34 can transmit a suitably configured signal to interact physically with one or more qubits 14 of the quantum circuit 12 in order to trigger measurement of the quantum state held in one or more qubits 14. The demodulator 36 can then sense a resulting signal released by the one or more qubits 14 pursuant to the measurement and can provide the data corresponding to the resulting signal to the controller 18A. Stated another way, the demodulator 26 is configured to output, based on the signal received, an estimate of one or more observables reflecting the quantum state of one or more qubits of the qubit register, and to furnish the estimate to the controller 18A. In one non-limiting example, the modulator 34 can provide, based on data from the controller 18A, an appropriate voltage pulse or pulse train to an electrode of one or more qubits 14, to initiate a measurement. In short order, the demodulator 36 can sense photon emission from the one or more qubits 14 and can assert a corresponding digital voltage level on a quantum-interface line into the controller 18A. Generally speaking, any measurement of a quantum-mechanical state is defined by the operator "O" corresponding to the observable to be measured; the result "R" of the measurement is guaranteed to be one of the allowed eigenvalues of "O". In the quantum computer 10, "R" is statistically related to the qubit-register state prior to the measurement but is not uniquely determined by the qubit-register state.

Pursuant to appropriate input from the controller 18A, the quantum interface 32 may be configured to implement one or more quantum-logic gates to operate on the quantum state held in the quantum circuit 12, for example, in a qubit register in the quantum circuit 12. Whereas the function of each type of logic gate of a classical computer system is described according to a corresponding truth table, the function of each type of quantum gate is described by a corresponding operator matrix. The operator matrix operates on (i.e., multiplies) the complex vector representing the qubit register state and effects a specified rotation of that vector in Hilbert space.

For example, the Hadamard gate HAD is defined by

$$\text{HAD} = \frac{1}{\sqrt{2}}\begin{bmatrix} 1 & 1 \\ 1 & -1 \end{bmatrix}. \qquad\qquad (A)$$

The HAD gate acts on a single qubit; it maps the basis state $|0>$ to $(|0> + |1>)/\sqrt{2}$, and maps $|1>$ to $(|0> - |1>)/\sqrt{2}$. Accordingly, the HAD gate creates a superposition of states that, when measured, have equal probability of revealing $|0>$ or $|1>$.

The phase gate S is defined by

$$S = \begin{bmatrix} 1 & 0 \\ 0 & e^{\frac{i\pi}{2}} \end{bmatrix}. \qquad\qquad (B)$$

The S gate leaves the basis state $|0>$ unchanged but maps $|1>$ to $e^{i\pi/2}|1>$. Accordingly, the probability of measuring either $|0>$ or $|1>$ is unchanged by this gate, but the phase of the quantum state of the qubit is shifted. This is equivalent to rotating $\psi$ by 90 degrees along a circle of latitude on the Bloch sphere of FIG. 2.

Some quantum gates operate on two or more qubits. The SWAP gate, for example, acts on two distinct qubits and swaps their values. This gate is defined by

$$SWAP = \begin{bmatrix} 1000 \\ 0010 \\ 0100 \\ 0001 \end{bmatrix}. \qquad\qquad (C)$$

Additionally, the SWAP gate can also be implemented by physically swapping the location of a pair of qubits. The foregoing list of quantum gates and associated operator matrices is non-exhaustive, but is provided for ease of illustration. Other quantum gates include Pauli-X, -Y, and -Z gates, the $\sqrt{NOT}$ gate, additional phase-shift gates, the $\sqrt{SWAP}$ gate, controlled cX, cY, and cZ gates, and the Toffoli, Fredkin, Ising, and Deutsch gates, as non-limiting examples.

Continuing in FIG. 1, suitably configured signals from modulators 34 of the quantum interface 32 can interact physically with one or more qubits 14 of the quantum circuit 12, for example, a qubit register in the quantum circuit 12, so as to assert any desired quantum-gate operation. As noted above, the desired quantum-gate operations are specifically defined rotations of a complex vector representing the qubit register state. In order to effect a desired rotation "O", one or more modulators of quantum interface 32 can apply a predetermined signal level $S_i$ for a predetermined duration $T_i$. In some examples, plural signal levels can be applied for plural sequenced or otherwise associated durations, as depicted in FIG. 3, to assert a quantum-gate operation on one or more qubits of the quantum circuit 12, for example, in a qubit register of the quantum circuit 12. In general, each signal level

$S_i$ and each duration $T_i$ is a control parameter adjustable by appropriate programming of controller 18A.

The term 'oracle' is used herein to describe a predetermined sequence of elementary quantum-gate and/or measurement operations executable by quantum computer 10. An oracle can be used to transform the quantum state of qubits 14 in the quantum circuit 12, for example, qubits in a qubit register, to effect a classical or non-elementary quantum-gate operation or to apply a density operator, for example. In some examples, an oracle may be used to enact a predefined 'black-box' operation *f(x),* which may be incorporated in a complex sequence of operations. To ensure adjoint operation, an oracle mapping n input qubits |x > to m output or ancilla qubits |y > *f(x)* may be defined as a quantum gate $O(|x > \otimes|y>)$ operating on the n+m qubits. In this case, O can be configured to pass the n input qubits unchanged but combine the result of the operation f(x) with the ancillary qubits via an XOR operation, such that $O(|x > \otimes t>)=x > \otimes|y+f(x)>$. As described further below, a state-preparation oracle is an oracle configured to generate a quantum state of specified qubit length.

In one or more embodiments, implicit in the description herein is that each qubit 14 of qubit registers can be interrogated via quantum interface 32 so as to reveal with confidence the standard basis vector |0> or |1> that characterizes the quantum state of that qubit. In some implementations, however, measurement of the quantum state of a physical qubit could be subject to error. Accordingly, any physical qubit 14 can be implemented as a logical qubit, which includes a grouping of physical qubits measured according to an error-correcting oracle that reveals the quantum state of the logical qubit with confidence.

As discussed herein, the quantum computer 10 can be implemented using any quantum computing technology. For example, a trapped-ion quantum computer is one example approach for a large-scale quantum computer. Ions, or charged atomic particles, can be confined and suspended in free space using electromagnetic fields. Qubits are stored in stable electronic states of each ion, and quantum information can be transferred through the collective quantized motion of the ions in a shared trap (interacting through the Coulomb force). Lasers are applied to induce coupling between the qubit states (for single qubit operations) or coupling between the internal qubit states and the external motional states (for entanglement between qubits). The fundamental operations of a quantum computer have been demonstrated with the currently highest accuracy in trapped-ion systems.

Another example quantum computer is a neutral atom quantum computer which is a modality of quantum computers built out of Rydberg atoms; this modality has many commonalities with trapped-ion quantum computers. The concept has been used to demonstrate a 48 logical qubit processor. To perform computation, the atoms are first trapped in a magneto-optical trap. Qubits are then encoded in the energy levels of the atoms. Initialization and operation of the computer is performed via the application of lasers on the qubits. For example, the laser can accomplish arbitrary single qubit gates and a CZ gate for universal quantum computation. The CZ gate is carried out by leveraging the Rydberg blockade which leads to strong interactions when the qubits are physically close to each other. To perform a CZ gate, a Rydberg pulse $\pi$ is applied to the control qubit, a $2\pi$ on the target qubit, and then a $\pi$ on the control. Measurement is enforced at the end of the computation with a camera that generates an image of the outcome by measuring the fluorescence of the atoms.

Further example quantum computers include linear optical quantum computing or linear optics quantum computation (LOQC), also referred to as photonic quantum computing (PQC). LOQC is a paradigm of quantum computation that allows (under certain conditions) universal quantum computation. LOQC uses photons as information carriers, mainly using linear optical elements or optical instruments (including reciprocal mirrors and waveplates) to process quantum information, and uses photon detectors and quantum memories to detect and store quantum information.

Another example is a topological quantum computer, in which the quantum state held in each qubit is a state of two or more braidable quasiparticles, or "anyons", observed within a non-Abelian topological phase of matter. The world lines of different anyons are quantum mechanically forbidden from intersecting or merging. This feature forces their paths to form stable braids that pass around each other in space-time. Relative to trapped particles used in other types of quantum computers, anyon braids are more resistant to quantum decoherence, which is a source of error in quantum computation. However, the realization of a topological quantum computer has the ability to engineer a suitable topological phase and to manipulate the anyons therein.

As noted herein, the instructions 24A cause measurements on the quantum circuit 12 using the modulators 34 and demodulators 36. A measurement of one or more physical qubits 14 is the result of sending a signal via the modulator 34 and receiving a signal back via the demodulator 36. The received signal, also referred to as the measurements, has the quantum information about the logical qubit that is formed of two or more physical qubits 14. Based on a signal sent and the received signal from the quantum circuit 12, a logical qubit is formed of two or more physical qubits 14 as understood by one of ordinary skill in the art. The various signals sent and corresponding signals received back can be performed using any desired encoding scheme or code, as understood by one of ordinary skill in the art.

Any code can be implemented in the instructions 24A in the quantum computer 10. In one or more embodiments, any quantum error correction code such as the Calderbank-Shor-Steane (CSS) code, the Hastings-Haah code, toric code, etc., can be applied on the quantum computer 100 in accordance with computer-executable instructions in the classical computer 100 having been sent to the quantum computer 10 for execution. As understood by one of ordinary skill in the art, the quantum code denotes a technique of operating an array of qubits 14 in the quantum circuit 12. Moreover, the quantum code may include a sequence of qubit measurements on the quantum circuit 12 of the quantum computer 10, and the classical computer 100 eventually stores those measurement outcomes. That sequence of qubit measurements is programmed into the classical computer 100, which then sends signals to the quantum computer 10, indicating which operations to perform on the quantum circuit 12.

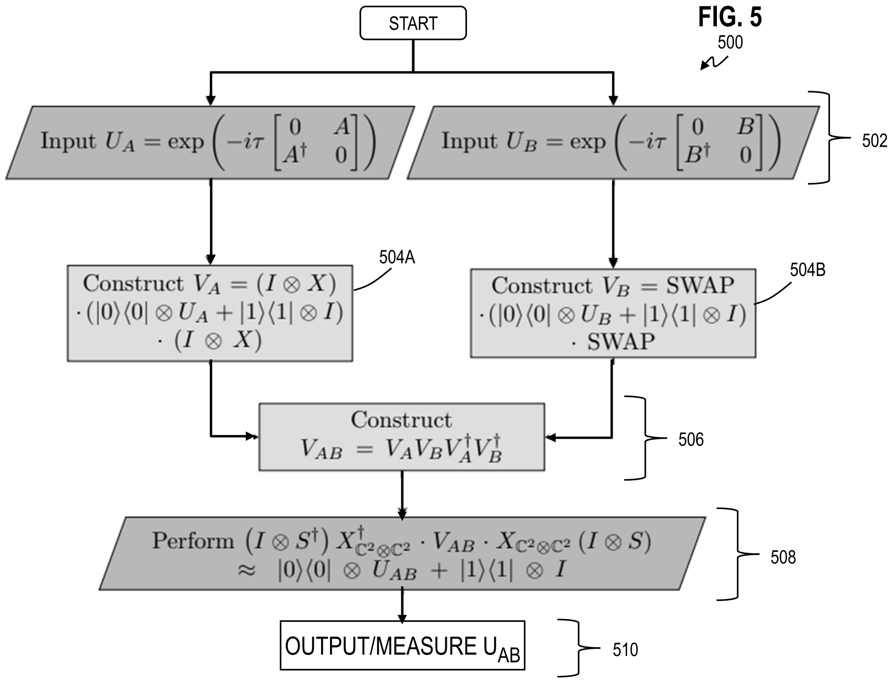

According to one or more embodiments, FIG. 5 depicts a flowchart of a computer-implemented method 500 for reducing the number ancilla qubits used in multiplying (any type of) matrices with Hamiltonian evolution, particularly when multiplying generic matrices utilizing two ancilla qubits. The computer-implemented method 500 may be included in one or more algorithms 130. The algorithms 130 can be utilized by the instructions 24A that cause the processor 20A to execute any function or process of the controller 18A in accordance with one or more embodiments. The instructions 24A may include the instruction set architecture (ISA) for executing the algorithms 130 on the qubits 14 of the quantum circuit 12. In one or more embodiments, the algorithms 130 may be transferred from the classical computer 100 to the quantum computer 130.

In this example, when reducing the number of ancilla qubits used in multiplying matrices with Hamiltonian evolution, the method 500 applies to matrices A and B that are generic matrices, and none of the matrices has to be a Hermitian matrix. When none of the matrices are Hermitian, even as the number of matrices being multiplied increases (e.g., 3, 4, 5, 6, ...10, 15, 20, etc.), the number of ancilla qubits utilized remains at two ancilla qubits and does not increase with an increase in the number of matrices being multiplied, according to one or more embodiments. For illustration purposes, two matrices A and B are being multiplied together, but the present disclosure applies to the multiplication of numerous matrices (e.g., 3, 4, 5, 6, ...10, 15, 20, etc.).

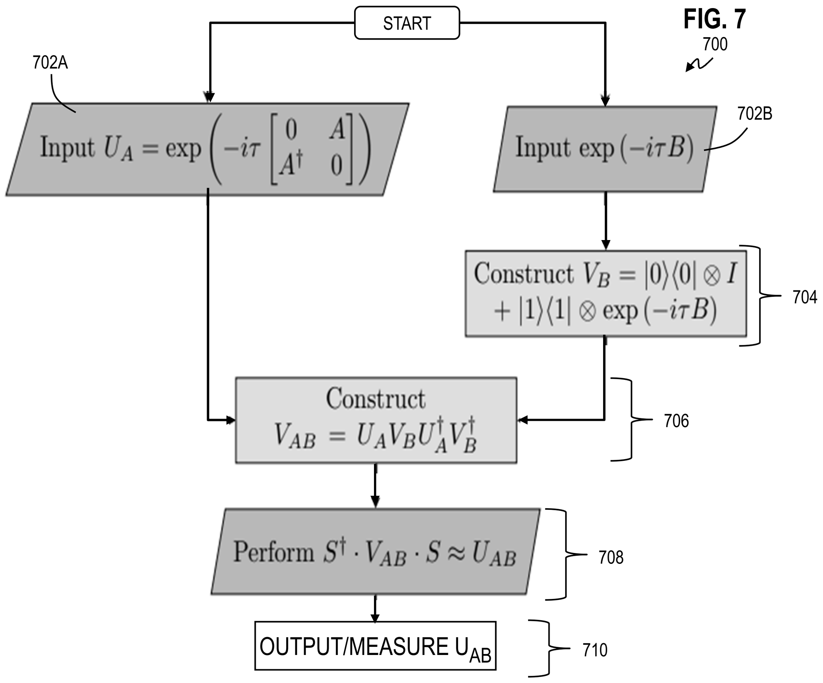

Further, generic matrices or general matrices refers to any type of matrices which can include, for example, none of the matrices being Hermitian or one or more of the matrices being Hermitian as discussed further below in FIG. 7. When at least one of the matrices is Hermitian, this further reduces the number of ancilla qubits to multiply the matrices from two ancilla qubits down to a single ancilla qubit even as the number of matrices being multiplied increases (e.g., 3, 4, 5, 6, ...10, 15, 20, etc.) in accordance with one or more embodiments.

Turning to FIG. 5, at block 502, the algorithm 130 executed on the qubits 14 of quantum computer 10 is configured to input the matrices $A$ and $B$ into Hamiltonian block encodings. This process begins by transforming matrix A into its Hermitian dilation and transforming the matrix B into its Hermitian dilation. Then, the process performs Hamiltonian block encoding via the unitary evolution for the Hermitian dilation of matrix A and the Hermitian dilation of matrix B resulting in the Hamiltonian block encodings $U_A$ and $U_B$, respectively, as input to the quantum computer 10. Reference can be made to Section II, Eq. 2, and Eq. 3 discussed herein.

At blocks 504A and 504B, the algorithm 130 executed on the qubits 14 of quantum computer 10 is configured to construct intermediate operator $V_A$ corresponding to matrix A and intermediate operator $V_B$ corresponding to matrix B. Reference can be made to Section III and the upper two portion of Eq. 9.

The operator $V_A$ is constructed by a first combination of a first tensor product times a controlled operation times a second tensor product, where the first tensor product is of the identity matrix ($I$) and the Pauli-X gate (X), where the controlled operation performs the Hamiltonian block encoding $U_A$ when the ancilla qubit is in state |0⟩, and where the second tensor product is of the identity matrix ($I$) and the Pauli-X gate (X). This results in the operator $V_A$ corresponding to matrix A. In the first combination, it can be seen that the qubit operations before and after the addition result are the same.

The operator $V_B$ is constructed by a second combination of a first SWAP gate times a controlled operation times a second SWAP gate, where the controlled operation performs the Hamiltonian block encoding $V_B$ when the ancilla qubit is in state |0⟩. This results in the operator $V_B$ corresponding to matrix B. Similarly, in the second combination, it can be seen that the qubit operations before and after the addition result are the same.

At block 506, the algorithm 130 executed on the qubits 14 of quantum computer 10 is configured to combine (e.g., multiply) the intermediate operator $V_A$ (corresponding to matrix A) and the intermediate operator $V_B$ (corresponding to matrix B) to form a new operator $V_{AB}$ as the result. This combination involves multiplying $V_A$ and $V_B$ together, along with their respective adjoints (conjugate transposes $V_A^\dagger$ and $V_B^\dagger$). This performs the commutator product formula on the intermediate operator $V_A$ (corresponding to matrix A) and the intermediate operator $V_B$. Reference can be made to Section III and Eq. 8 discussed herein.

At block 508, the algorithm 130 executed on the qubits 14 of quantum computer 10 is configured to perform post processing that includes a series of operations performed on $V_{AB}$ to achieve the desired matrix multiplication, resulting in $U_{AB}$ as the output block 510. The result $U_{AB}$ is an approximation of the product of the original matrices A and B, encoded in a form that uses fewer ancilla qubits (e.g., 2 ancilla qubits) of the qubits 14 compared to performing the multiplication of matrices $A$ and $B$ on a quantum computer without using the computer-implemented method 500 for reducing the number ancilla qubits.

The post processing includes multiplying a first combination times the operator $V_{AB}$ times a second combination, where the first combination is the tensor product of the identity matrix ($I$) and the transpose of phase gate ($S^\dagger$) times the

transpose of cyclic shift gate ( $X^{\dagger}_{\mathbb{C}^2 \otimes \mathbb{C}^2}$ ), where the second combination is the cyclic shift gate ( $X_{\mathbb{C}^2 \otimes \mathbb{C}^2}$ ) times the tensor product of the identity matrix (*I*) and the phase gate (S). Reference can be made to Section III and the bottom portion of Eq. 9 discussed herein.

It should be appreciated that the output of operator $U_{AB}$ corresponds to the state of the qubits 14 as a result of multiplying the matrices. In one or more embodiments, the operator $U_{AB}$ can be measured on the quantum computer 10 and output to the classical computer 100. In one or more embodiments, the operator $U_{AB}$ can be utilized as input for another quantum operation on the quantum computer 10. The operator $U_{AB}$ has data or values such as one or more states of qubits 14, and the quantum computer 10 can be controlled to utilize the states of operator $U_{AB}$ to perform one or more quantum gates such as Clifford gates, non-Clifford gates, etc., such that the output can be measured.

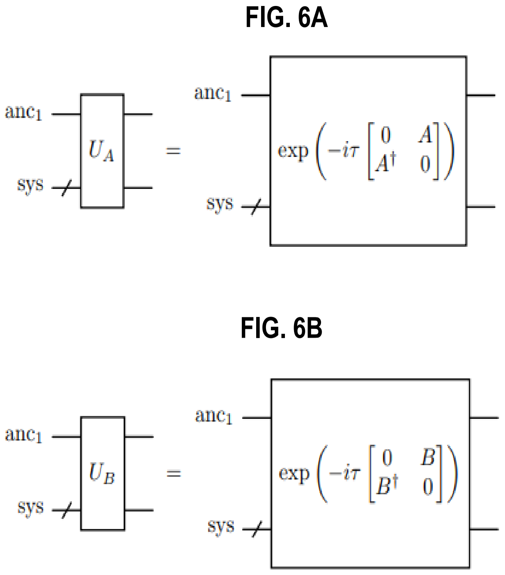

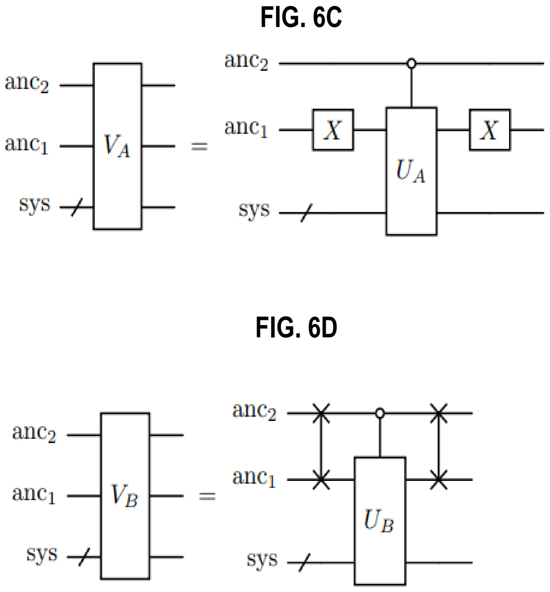

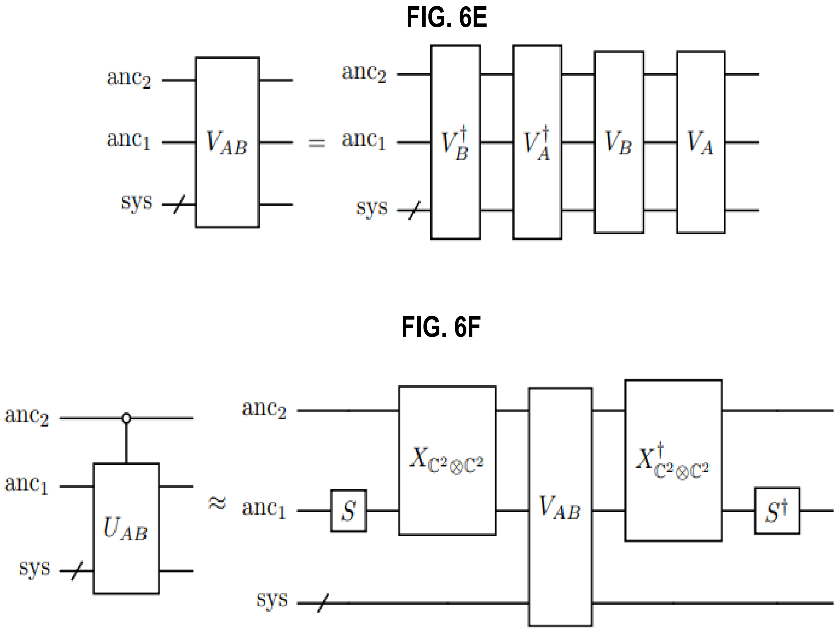

FIGS. 6A, 6B, 6C, 6D, 6E, and 6F depict quantum circuit diagrams for multiplying generic matrices in accordance with one or more embodiments. FIGS. 6A, 6B, 6C, 6D, 6E, and 6F may generally be referred to as FIG. 6. In one or more embodiments, the quantum circuit diagrams can be executed on the qubits 14 of the quantum computer 10. FIG. 6 illustrates that (at most) two ancilla qubits, for example, ancilla qubit 1 and ancilla qubit 2, are utilized for the process of multiplying generic matrices, along with system qubits (e.g., primary qubits or data qubits) required to perform the operation for the instruction set architecture being utilized. Similar to FIG. 5, FIG. 6 illustrates an example for reducing the number of ancilla qubits used in multiplying matrices A and B with Hamiltonian evolution (as compared to the state-of-the-art), where matrices A and B are generic matrices that are not required to be Hermitian matrices. As noted herein, the procedure to multiply generic or general matrices, none of these matrices are required to be Hermitian. For example, all of the matrices being multiplied could be non-Hermitian matrices, and (at most) two ancilla qubits are utilized.

FIGS. 6A and 6B depict the quantum circuit diagrams for preprocessing the matrices *A* and *B* and correspond to block 502 in FIG. 5. In FIG. 6A, the quantum circuit generates the Hamiltonian block encoding $U_A$ for matrix A by transforming matrix A into its Hermitian dilation and then performing Hamiltonian block encoding via the unitary evolution for the Hermitian dilation of matrix A. In FIG. 6B, the quantum circuit generates the Hamiltonian block encoding $U_B$ for matrix *B* by transforming matrix *B* into its Hermitian dilation and then performing Hamiltonian block encoding via the unitary evolution for the Hermitian dilation of matrix B. In FIGS. 6A and 6B, it can be seen that the quantum circuit diagrams utilized 1 ancilla qubit (e.g., ancilla qubit 1) to perform the operations.

FIGS. 6C and 6D depict the quantum circuit diagrams for generating intermediate operator $V_A$ corresponding to matrix A and intermediate operator $V_B$ corresponding to matrix B as preprocessing and correspond to blocks 504A and 504B in FIG. 5. To generate operator $V_A$ in FIG. 6C, the quantum circuit diagram depicts the (first) Pauli-X gate (X) on ancilla qubit 1, the controlled operation that performs $U_A$ on ancilla qubit 1 and system qubits conditioned on the state of ancilla qubit 2 being |0⟩, and the (second) Pauli-X gate (*X*) on ancilla qubit 1. To generate operator $V_B$ in FIG. 6D, the quantum circuit diagram depicts the (first) SWAP gate on ancilla qubits 1 and 2, the controlled operation that performs $U_B$ on ancilla qubit 1 and system qubits conditioned on the state of ancilla qubit 2 being |0⟩, and the (second) SWAP gate on ancilla qubits 1 and 2. In FIGS. 6C and 6D, it can be seen that the quantum circuit diagrams utilize 2 ancilla qubits (e.g., ancilla qubits 1 and 2) to perform the operations. This serves as preprocessing to the matrices before performing the multiplication.

FIG. 6E depicts the quantum circuit diagram for generating $V_{AB}$ as representing the multiplication of matrices *A* and *B,* which corresponds to block 506 in FIG. 5. In FIG. 6E, the quantum circuit diagram depicts the conjugate transpose $V^{\dagger}_B$ (on ancilla qubits 1 and 2 and the system qubits), the conjugate transpose $V^{\dagger}_A$ (on ancilla qubits 1 and 2 and the system qubits), the intermediate operator $V_B$ (on ancilla qubits 1 and 2 and the system qubits), and the intermediate operator $V_A$ (on ancilla qubits 1 and 2 and the system qubits), all of which approximates multiplying matrices *A* and *B*. This performs the commutator product formula.

FIG. 6F depicts the quantum circuit diagram for generating the final output $U_{AB}$ by performing post processing to approximate the matrix multiplication of matrices *A* and *B,* which corresponds to blocks 508 and 510. In FIG. 6F, the quantum circuit diagram depicts the phase gate (S) on ancilla 1, the cyclic shift gate ( $X_{\mathbb{C}^2 \otimes \mathbb{C}^2}$ ) on ancillas 1 and 2 and the system qubits, the operator $V_{AB}$ on ancillas 1 and 2 and the system qubits, the transpose of the cyclic shift gate ( $X^{\dagger}_{\mathbb{C}^2 \otimes \mathbb{C}^2}$ ) on ancillas 1 and 2, and the transpose of phase gate (S†) on ancilla 1. The result $U_{AB}$ is an approximation of the product of the original matrices *A* and *B,* encoded in a form that uses fewer ancilla qubits (e.g., 2 ancilla qubits) of the qubits 14 compared to performing the multiplication of matrices *A* and *B* on a quantum computer without using the present disclosure for reducing the number ancilla qubits.

According to one or more embodiments, FIG. 7 is a flowchart of a computer-implemented method 700 for reducing the number ancilla qubits used in multiplying (at least one) Hermitian matrix with another matrix, thereby utilizing (only) 1 ancilla qubit for the multiplication. The computer-implemented method 700 may be included in one or more algorithms 130. The algorithms 130 can be utilized by the instructions 24A that cause the processor 20A to execute any function or process of the controller 18A in accordance with one or more embodiments. The instructions 24A may include the instruction set architecture (ISA) for executing the algorithms 130 on the qubits 14 of the quantum circuit 12. In one or more embodiments, the algorithms 130 may be transferred from the classical computer 100 to the quantum computer 130.

In this example, when reducing the number of ancilla qubits used in multiplying matrices with Hamiltonian evolution, one of the matrices A and B is Hermitian, thereby utilizing 1 ancilla qubit (as noted herein 2 ancilla qubits are utilized when none of the multiplicands are Hermitian (e.g., generic matrices) in FIGS. 5 and 6). In this example scenario, it may be assumed that the matrix $B$ is a Hermitian matrix while the matrix $A$ is not Hermitian matrix.

Turning to FIG. 7, at blocks 702A and 702B, the algorithm 130 executed on the qubits 14 of quantum computer 10 is configured to input the matrices A and B into Hamiltonian block encodings. In block 702A, matrix A is encoded in the diagonal block form a Hermitian matrix, and the process can directly perform Hamiltonian block encoding with unitary evolution, which results in intermediate operator $U_A$. In block 702B, the process performs a Hamiltonian evolution governed by the Hermitian matrix B. Reference can be made to Section III and Eq. 10 discussed herein.

At block 704, the algorithm 130 executed on the qubits 14 of quantum computer 10 is configured to construct intermediate operator $V_B$ corresponding to multiplicand B. The operator $V_B$ is a controlled operation that performs the Hamiltonian evolution $exp(-i\tau B)$ conditioned on the ancilla being in state $|0\rangle$. Because the matrix $B$ is assumed to be Hermitian, it generates a Hamiltonian evolution directly without needing to do a further dilation.

At block 706, the algorithm 130 executed on the qubits 14 of quantum computer 10 is configured to combine (e.g., multiply) the intermediate operator $U_A$ (corresponding to matrix A) and the intermediate operator $V_B$ (corresponding to multiplicand $B$) along with their respective adjoints (conjugate transposes $U_A^\dagger$ and $V_B^\dagger$) to form a new operator $V_{AB}$ as the result. This combination involves multiplying intermediate operator $U_A$, intermediate operator $V_B$, conjugate transpose $U_A^\dagger$, and conjugate transpose $V_B^\dagger$, thereby resulting in the multiplication of A and B. Reference can be made to Section III and Eq. 10 as discussed herein. Additionally, reference can be made to Eq. 8.

At block 708, the algorithm 130 executed on the qubits 14 of quantum computer 10 is configured to perform post processing that includes a series of operations performed on operator $V_{AB}$ to achieve the desired matrix multiplication, resulting in operator $U_{AB}$ as the output block 710. The result $U_{AB}$ is an approximation of the product of the original multiplicands A and B, encoded in a form that uses fewer ancilla qubits (e.g., 1 ancilla qubit) of the qubits 14 compared to performing the multiplication of multiplicands A and B on a quantum computer without using the computer-implemented method 700 for reducing the number ancilla qubits. The post processing includes multiplying together the transpose of phase gate ($S^\dagger$), the operator $V_{AB}$, and the phase gate (S), thereby resulting in the output $U_{AB}$.

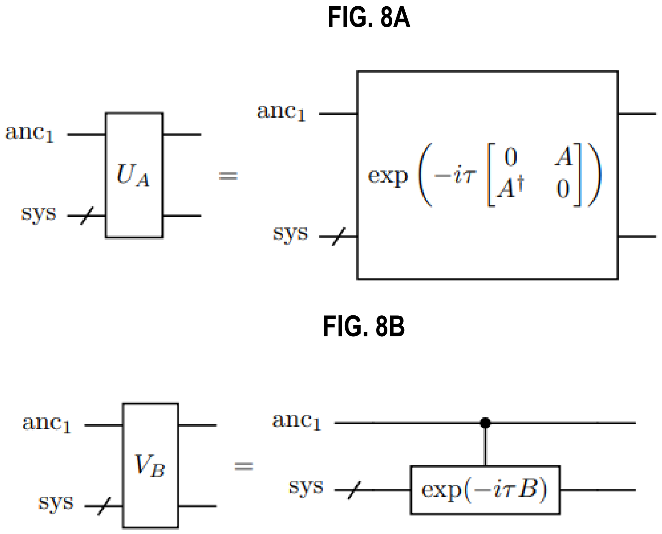

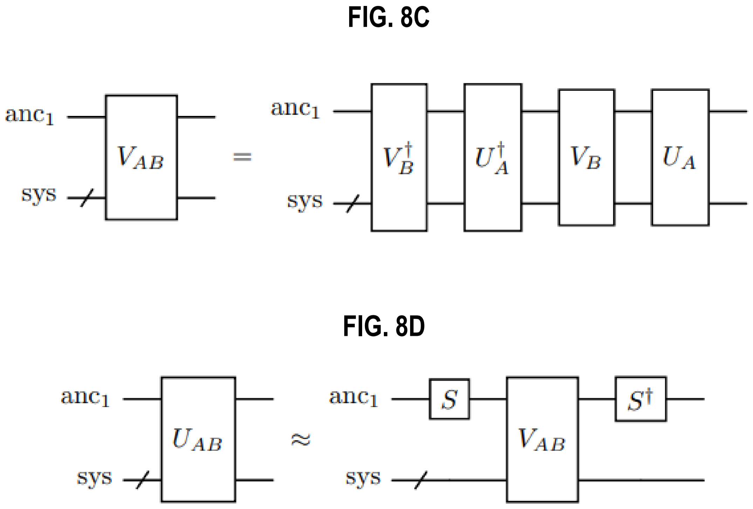

FIGS. 8A, 8B, 8C, and 8D depict quantum circuit diagrams for multiplying matrices where one is a Hermitian matrix in accordance with one or more embodiments. FIGS. 8A, 8B, 8C, and 8D may generally be referred to as FIG. 8. In one or more embodiments, the quantum circuit diagrams can be executed on the qubits 14 of the quantum computer 10. FIG. 8 illustrates that (at most) one ancilla qubit, for example, ancilla qubit 1 ($anc_1$), is utilized for the process of multiplying matrices with (at least) one being a Hermitian matrix, along with system qubits (e.g., primary qubits or data qubits) required to perform the operation for the instruction set architecture being utilized. Similar to FIG. 7, FIG. 8 illustrates an example for reducing the number of ancilla qubits used in multiplying matrices with Hamiltonian evolution (as compared to the state-of-the-art), where (at least) one of the matrices is Hermitian.

FIG. 8A depicts the quantum circuit diagram for preprocessing the Hermitian matrix A and corresponds to block 702A in FIG. 7. In FIG. 8A, the quantum circuit depicts the Hamiltonian block encoding $U_A$ for Hermitian matrix A by performing Hamiltonian block encoding via the unitary evolution for the Hermitian matrix A. In FIG. 8A, it can be seen that the quantum circuit diagram utilizes 1 ancilla qubit (e.g., ancilla qubit 1) to perform the operation.

FIG. 8B depicts the quantum circuit diagram for preprocessing the multiplicand B and corresponds to blocks 702B and 704 in FIG. 7. In FIG. 8B, the quantum circuit diagram depicts the Hamiltonian evolution on system qubits (e.g., primary qubits or data qubits) generated by the matrix multiplicand B controlled by the ancilla qubit 1 being in state $|1\rangle$, which results in the intermediate operator $V_B$. In FIG. 8B, it can be seen that the quantum circuit diagram utilizes 1 ancilla qubit (e.g., ancilla qubit 1) to perform the operation.

FIG. 8C depicts the quantum circuit diagram for generating $V_{AB}$ as representing the multiplication of matrices $A$ and $B$, which corresponds to block 706 in FIG. 7. In FIG. 8C, the quantum circuit diagram depicts the conjugate transpose $V_B^\dagger$ (on ancilla qubit 1 and the system qubits), the conjugate transpose $U_A^\dagger$ (on ancilla qubit 1 and the system qubits), the intermediate operator $V_B$ (on ancilla qubit 1 and the system qubits), and intermediate operator $U_A$ (on ancilla qubit 1 and the system qubits), all of which approximates multiplying matrices $A$ and $B$.

FIG. 8D depicts the quantum circuit diagram for generating the final output $U_{AB}$ by performing post processing to approximate the matrix multiplication of matrices $A$ and $B$, which corresponds to blocks 708 and 710 in FIG. 7. In FIG. 8D, the quantum circuit diagram depicts the phase gate (S) on ancilla 1, the operator $V_{AB}$ on ancilla 1 and the system qubits, and the transpose of phase gate ($S^\dagger$) on ancilla 1. The result $U_{AB}$ is an approximation of the product of the original matrices $A$ and $B$, encoded in a form that uses fewer ancilla qubits (e.g., 1 ancilla qubit) of the qubits 14 compared to performing the multiplication of matrices *A* and *B* on a quantum computer without using the present disclosure for reducing the number ancilla qubits.

Headings are presented in the descriptions for ease of understanding and to assist the reader. The use of headings is not meant to be limiting. It should be appreciated that the descriptions presented under headings can be integrated with the descriptions presented under other headings and/or descriptions with no headings.

I. INTRODUCTION

The classical computer 100 includes software 111 having computer-executable instructions that, when executed by one or more processors 101, cause the processors 101 to perform in accordance with one or more embodiments as discussed herein. The software 111 can include, be integrated with, and/or call various pieces of software to operate as discussed herein. The software 111 is configured to operate with or call one or more application programing interfaces (APIs) to utilize various software tools, software programs, and algorithms 130 as understood by one of ordinary skill in the art. The algorithms 130 cause the quantum circuit 12 to perform quantum operations on the qubits 14 in order to change the state of the qubits 14 and/or receive measurements or measurement outcomes from the qubits 14. The classical computer 100 and/or the controller 18A receives the measurements or measurement outcomes, checks for errors, performs error correction, and/or causes further quantum operations to be performed on the qubits 14 of the quantum circuit 12 according to the states of the qubits 14 including any errors that are corrected and/or errors that could not be corrected. The quantum circuit 12 is controlled by the classical computer 100 and/or the controller 18A to perform the following procedure of the algorithms 130.

Quantum computers hold the promise of solving various computational problems faster than classical computers. One such an example is the dynamical simulation of many-body Hamiltonians which is a problem that motivates Feynman, Manin, and others to propose the idea of quantum computers. Due to the exponential growth of Hilbert space dimensions, Hamiltonian simulation is intractable for classical computers, but there exist efficient quantum algorithms that approximate the evolution $e^{-itH}$ using only a polynomially amount of resources. Another prominent example is the ground state preparation and energy estimation, whose solution provides insight for understanding complex chemical reactions and material properties. This corresponds to the approximation of ground state projector of an underlying Hamiltonian H, which can be efficiently realized on a quantum computer assuming the availability of suitable initial states and energy gaps.

For both Hamiltonian simulation and ground state preparation, quantum algorithms proceed by transforming high-dimensional operators that are intrinsically Hermitian. This underlying idea was extended by the Quantum Singular Value Transformation (QSVT) algorithm to realize more general matrix arithmetic on a quantum computer. Since the singular values of a Hermitian operator agree with its eigenvalues in magnitude, QSVT can be applied to simulate Hamiltonians and prepare ground states, and its performance recovers or surpasses that of alternative methods. However, it also supports operations like matrix multiplication that does not necessarily preserve Hermicity, which arise naturally in a host of applications such as solving systems of linear equations and differential equations, providing a unified methodology for developing quantum algorithms.

The input to QSVT is specified through a unitary of the form

$$U_A = \begin{bmatrix} A & * \\ * & * \end{bmatrix}, \qquad\qquad (\text{Eq. 1})$$

where the desired A is encoded in the top-left block with the remaining blocks determined by the unitarity constraint. The circuit implementation of such a block encoding typically requires a significant number of ancilla qubits and multi-controlled quantum gates, and thus does not align with the capabilities of quantum devices expected in the foreseeable future. However, for specific problems such as quantum simulation and ground state preparation, the input matrix H is intrinsically Hermitian and one can instead encode it as a Hamiltonian evolution $e^{-i}$, which leads to quantum algorithms comparable to QSVT using only constant number of ancilla qubits and simpler quantum gates, substantially reducing the resource requirement, in accordance with one or more embodiments.

II. HAMILTONIAN BLOCK ENCODING AND MATRIX MULTIPLICATION

In accordance with one or more embodiments, the present disclosure demonstrates how to perform elementary matrix arithmetic, particularly matrix multiplication, using Hamiltonian evolutions of individual multiplicands. As matrix multiplication serves as a fundamental primitive in algorithmic design, the method yields a generic/general resource reduction for a range of quantum algorithms beyond existing results focusing on the Hermitian case.

To handle a general matrix A, it is natural to consider its Hermitian dilation $\begin{bmatrix} 0 & A \\ A^\dagger & 0 \end{bmatrix}$ . This consumes 1

additional qubit (e.g., 1 ancilla qubit) beyond those qubits encoding (e.g., primary qubits or data qubits) the operator A. The present disclosure then defines the Hamiltonian block encoding via the unitary evolution

$$U_A(t) = \exp\left(-it \begin{bmatrix} 0 & A \\ A^\dagger & 0 \end{bmatrix}\right).$$ (Eq. 2)

In practice, the evolution $U_A(t)$ can be performed directly on a quantum computer when A is a sparse operator, or it may be constructed indirectly from elementary arithmetic of the input matrices such as linear combinations and matrix multiplications. When the Hamiltonian is a sparse operator (e.g., it has many zero elements and only a few non-zero elements), the unitary evolution can be performed more efficiently. For the purpose of generality, the present disclosure quantifies the complexity in terms of the number of calls to $U_A(t)$ with a specified evolution time and accuracy, which may be further bounded when the method is instantiated in concrete applications, such as in solving the linear system problem on a quantum computer 10.

Given Hamiltonian block encodings of *A* and *B*, the present disclosure provides a method for constructing the evolution where *AB* is encoded in off-diagonal block of the resulting Hamiltonian, for example, with the expression:

$$U_A(\tau) = \exp\left(-i\tau \begin{bmatrix} 0 & A \\ A^\dagger & 0 \end{bmatrix}\right), \quad U_B(\tau) = \exp\left(-i\tau \begin{bmatrix} 0 & B \\ B^\dagger & 0 \end{bmatrix}\right) \rightarrow \exp\left(-it \begin{bmatrix} 0 & AB \\ (AB)^\dagger & 0 \end{bmatrix}\right)$$

$$= U_{AB}(t).$$

(Eq. 3)

The present disclosure shows that, in order to evolve for time t with accuracy ε, it suffices to make r calls to Hamiltonian block encodings of *A* and *B* each with time $\tau = \dfrac{t}{r}$ and accuracy $O\left(\dfrac{\epsilon}{r}\right)$, where

$$r = \frac{(\|A\| + \|B\|)^{2+o(1)} t^{1+o(1)}}{\epsilon^{o(1)}}.$$

(Eq. 4)

The quantum circuit comprises of applying $U_A(\tau)$ and $U_B(\tau)$ and their conjugate transpose a total number of *r* times with $\tau = \dfrac{t}{r}$. In one or more embodiments, the time t may be set in advance. In one or more embodiments, the number of calls r may be set in advance.

In accordance with one or more embodiments, the scheme uses 2 ancilla qubits for multiplying general matrices, and only 1 single ancilla when either matrix A or *B* is Hermitian (despite that their product *AB* is typically non-Hermitian).

By invoking the above scheme recursively, one can multiply *m* matrices $A_1 \dots A_m$. Because the Hamiltonian block encoding is approximately maintained throughout, one needs at most 2 ancilla qubits for the entire computation. This is in contrast with matrix multiplication using the standard block encoding, where the consumption (e.g., number) of ancilla qubits grows with the number of multiplicands in existing techniques.

## III. COMMUTATOR PRODUCT FORMULA

The present disclosure achieves this using product formulas for exponentials of commutators, along with techniques for manipulating Hamiltonian-encoded matrix blocks according to one or more embodiments.

In the lowest possible order, the commutator product formula takes the form

$$\left\| e^{\tau C} e^{\tau D} e^{-\tau C} e^{-\tau} - e^{\tau^2 [C,D]} \right\| \leq \frac{5\tau^3}{6} \left\| [C, [C, D]] \right\| + \frac{\tau^3}{2} \left\| [D, [D, C]] \right\|,$$

(Eq. 5)

where *C, D* are anti-Hermitian and $\tau \geq 0$ without loss of generality. The above bound can be derived from the integral representation

$$e^{-\tau^2[C,D]}e^{\tau C}e^{\tau D}e^{-\tau C}e^{-\tau D} - I = \int_0^\tau d\tau_1\, e^{-\tau_1^2[C,D]}e^{\tau_1 C}R(\tau_1)e^{\tau_1 D}e^{-\tau_1 C}e^{-\tau_1 D}$$

$$(\text{Eq. 6})$$

with R($\tau_1$) =

$$-\int_0^{\tau_1} d\tau_2\, e^{(\tau_1-\tau_2)D}\tau_2[D,[D,C]]e^{-(\tau_1-\tau_2)D} - \int_0^{\tau_1} d\tau_2\, e^{(\tau_1-\tau_2)D}\tau_1[D,[D,C]]e^{-(\tau_1-\tau_2)D}$$

$$-\int_0^{\tau_1} d\tau_2\, e^{\tau_1 D}e^{-(\tau_1-\tau_2)C}\tau_2[C,[C,D]]e^{(\tau_1-\tau_2)C}e^{-\tau_1 D}$$

$$-\int_0^{\tau_1} d\tau_2\, e^{-(\tau_1-\tau_2)C}2\tau_1[C,[C,D]]e^{(\tau_1-\tau_2)C}.$$

$$(\text{Eq. 7})$$

Hence, the commutator formula can approximate the evolution of *CD - DC* using exponentials of individual C and *D*, which is accurate for a short time period. To evolve for a general time t with accuracy $\varepsilon$, the present disclosure divides the evolution into $r = O\left(\frac{(\|C\|+\|D\|)^{1.5}t^{1.5}}{\epsilon^{0.5}}\right)$ steps and implements each using the commutator product formula. The time scaling $\sim t^{1.5}$ can then be improved to almost linear $\sim t^{1+o(1)}$ by switching to higher-order formulas. Higher-order formulas are formulas that attain scaling $\sim t^{1+\delta}$ for $\delta$ a positive number arbitrarily close to 0.

By definition, a commutator product formula generates the evolution of a matrix product and its reverse-ordered product with an equal weighting. According to one or more embodiments, this can be applied to produce the desired Hamiltonian block encoding as follows. The present disclosure introduces another ancilla qubit to dilate the Hamiltonian and employ the commutator product formula to approximate

$$\exp\left(-i\tau\begin{bmatrix}0 & A^\dagger & 0 & 0\\ A & 0 & 0 & 0\\ 0 & 0 & 0 & 0\\ 0 & 0 & 0 & 0\end{bmatrix}\right)\exp\left(-i\tau\begin{bmatrix}0 & 0 & B & 0\\ 0 & 0 & 0 & 0\\ B^\dagger & 0 & 0 & 0\\ 0 & 0 & 0 & 0\end{bmatrix}\right)$$

$$\exp\left(i\tau\begin{bmatrix}0 & A^\dagger & 0 & 0\\ A & 0 & 0 & 0\\ 0 & 0 & 0 & 0\\ 0 & 0 & 0 & 0\end{bmatrix}\right)\exp\left(i\tau\begin{bmatrix}0 & 0 & B & 0\\ 0 & 0 & 0 & 0\\ B^\dagger & 0 & 0 & 0\\ 0 & 0 & 0 & 0\end{bmatrix}\right)$$

$$= \exp\left(-i\tau^2\begin{bmatrix}0 & 0 & 0 & 0\\ 0 & 0 & -iAB & 0\\ 0 & i(AB)^\dagger & 0 & 0\\ 0 & 0 & 0 & 0\end{bmatrix}\right) + O(\tau^3(\|A\| + \|B\|)^3).$$

Here, each multiplicand can be transformed into a standard Hamiltonian block encoding using Clifford corrections such as the Pauli-X gate, the SWAP gate, the phase gate S, and the cyclic shift gate

$X_{\mathbb{C}^2 \otimes \mathbb{C}^2} : |00\rangle \mapsto |01\rangle \mapsto |10\rangle \mapsto |11\rangle \mapsto |00\rangle$. The following expression shows preprocessing first and then shows postprocessing.

$$\begin{bmatrix} 0 & A & 0 & 0 \\ A^\dagger & 0 & 0 & 0 \\ 0 & 0 & 0 & 0 \\ 0 & 0 & 0 & 0 \end{bmatrix} = (I \otimes X) \begin{bmatrix} 0 & A^\dagger & 0 & 0 \\ A & 0 & 0 & 0 \\ 0 & 0 & 0 & 0 \\ 0 & 0 & 0 & 0 \end{bmatrix} (I \otimes X),$$

$$\begin{bmatrix} 0 & B & 0 & 0 \\ B^\dagger & 0 & 0 & 0 \\ 0 & 0 & 0 & 0 \\ 0 & 0 & 0 & 0 \end{bmatrix} = \mathrm{SWAP} \begin{bmatrix} 0 & 0 & B & 0 \\ 0 & 0 & 0 & 0 \\ B^\dagger & 0 & 0 & 0 \\ 0 & 0 & 0 & 0 \end{bmatrix} \mathrm{SWAP},$$

$$\begin{bmatrix} 0 & AB & 0 & 0 \\ (AB)^\dagger & 0 & 0 & 0 \\ 0 & 0 & 0 & 0 \\ 0 & 0 & 0 & 0 \end{bmatrix} = (I \otimes S^\dagger) X^\dagger_{\mathbb{C}^2 \otimes \mathbb{C}^2} \begin{bmatrix} 0 & 0 & 0 & 0 \\ 0 & 0 & -iAB & 0 \\ 0 & i(AB)^\dagger & 0 & 0 \\ 0 & 0 & 0 & 0 \end{bmatrix} X_{\mathbb{C}^2 \otimes \mathbb{C}^2} (I \otimes S)$$

(Eq. 9)

This (Eq. 9) uses 2 additional qubits beyond those supporting the input operators *A* and *B* as claimed. Higher-order formulas then improve the time scaling to be almost linear. Although both are illustrated in Eq. 9, the preprocessing employs the Pauli-X gate, the SWAP gate, and the identity gate (I), while the post processing employs the phase gate S, the cyclic shift gate $X_{\mathbb{C}^2 \otimes \mathbb{C}^2}$, and the identity gate (I).

The above discussion handles the general case where multiplicands A and B are both arbitrary operators. In many applications such as solving systems of linear equations, examples may be given with the promise that at least one multiplicand (say B) is Hermitian. The present disclosure can then directly evolve a Hamiltonian where B is encoded in the diagonal block, yielding an alternative construction

$$\exp\left(-i\tau \begin{bmatrix} 0 & A \\ A^\dagger & 0 \end{bmatrix}\right) \exp\left(-i\tau \begin{bmatrix} 0 & 0 \\ 0 & B \end{bmatrix}\right) \exp\left(i\tau \begin{bmatrix} 0 & A \\ A^\dagger & 0 \end{bmatrix}\right) \exp\left(i\tau \begin{bmatrix} 0 & 0 \\ 0 & B \end{bmatrix}\right)$$

$$= \exp\left(-i\tau^2 \begin{bmatrix} 0 & -iAB \\ i(AB)^\dagger & 0 \end{bmatrix}\right) + \boldsymbol{O}(\tau^3(\|A\| + \|B\|)^3).$$

(Eq. 10)

When noting that the quantum state "directly evolves" under a Hamiltonian, it means that a Hamiltonian can be constructed by the Hermitian matrix B without the need to dilate it using another ancilla qubit. The state changes according to the dynamics dictated by the Hamiltonian.

An analogous scheme holds when *A* is Hermitian. When *A* is Hermitian, this uses only 1 ancilla qubit and improves over the generic case discussed above.

IV. NEARLY OPTIMAL LINEAR SYSTEM SOLVER WITH SINGLE ANCILLA

Solving systems of linear equations provides one of the most enticing sources of exponential speedups for quantum computers. Indeed, as shown in the seminal work of Harrow, Hassidim, and Lloyd, the quantum linear system problem is BQP-complete and captures the full power of quantum computation, where BQP stands for Bounded-Error Quantum Polynomial Time. Given the ubiquity of linear equations in various areas of science, quantum linear system algorithms have found broad applications such as computing electromagnetic scattering, computing Green's functions of quantum many-body systems, estimating electrical resistance of networks, solving differential equations, and optimization. Its resolution also underpins more advanced quantum algorithms for eigenvalue transformation, which can be applied to understand non-Hermitian physics and transcorrelated quantum chemistry.

In the quantum linear system problem, a goal in one or more embodiments is to produce a quantum state

$\frac{A^{-1}|b>}{\|A^{-1}|b>\|}$ proportional to the solution of a linear system *Ax = b,* by making queries to the block encoding of coefficient matrix *A* and a unitary preparing the initial state $|b> = \frac{b}{\|b\|}$. The state-of-the-art provided optimal quantum algorithms for the linear system problem with query complexity $\boldsymbol{O}\left(\kappa \log\left(\frac{1}{\epsilon}\right)\right)$ to the coefficient matrix, where $\kappa = \|A^{-1}\|$ is the

spectral condition number and ε is the accuracy of solution state. However, these algorithms in the state-of-the-art rely on the standard block encoding and require a number of ancilla qubits growing with the size of the linear system and multi-controlled quantum gates (such as Toffoli gates) to implement. The present disclosure shows that, by applying matrix multiplication within Hamiltonian block encoding, one can solve the quantum linear system problem with nearly optimal

query complexity $\kappa \left(\frac{\kappa}{\epsilon}\right)^{o(1)}$, using only 1 ancilla qubit.

Specifically, the present disclosure performs

$$\exp\left(-i\tau \begin{bmatrix} s|b\rangle\langle b| + I - |b\rangle\langle b| & 0 \\ 0 & 0 \end{bmatrix}\right) \exp\left(-i\tau \begin{bmatrix} 0 & A \\ A^\dagger & 0 \end{bmatrix}\right)$$

$$\exp\left(i\tau \begin{bmatrix} s|b\rangle\langle b| + I - |b\rangle\langle b| & 0 \\ 0 & 0 \end{bmatrix}\right) \exp\left(i\tau \begin{bmatrix} 0 & A \\ A^\dagger & 0 \end{bmatrix}\right)$$

$$= \exp\left(-i\tau^2 \begin{bmatrix} 0 & -i(s|b\rangle\langle b| + I - |b\rangle\langle b|)A \\ i\left((s|b\rangle\langle b| + I - |b\rangle\langle b|)A\right)^\dagger & 0 \end{bmatrix}\right) + \boldsymbol{O}(\tau^3),$$

$$(\text{Eq. }11)$$

whose time dependence can again be improved to nearly linear by higher-order formulas. Here, s is a preconditioning parameter chosen to scale like s = $\Theta\left(\frac{\|A^{-1}|b\rangle\|}{\|A^{-1}\|}\right)$, and the algorithm multiplies two matrices s|b⟩⟨b| + *I* - |b⟩⟨b| and A.

Since the scaling matrix s|b⟩⟨b| + *I* - |b⟩⟨b| is Hermitian, the above matrix multiplication is achievable with query complexity

$\frac{1}{\epsilon^{o(1)}}$ and only 1 ancilla qubit. The result Hamiltonian block encoding can then be inverted with query complexity

$\boldsymbol{O}\left(\kappa \log\left(\frac{1}{\epsilon}\right)\right)$ that succeeds with a constant success probability. Combining these two steps along with a rescaling of

the error parameter $\epsilon \mapsto \frac{\epsilon}{\kappa}$, the present disclosure obtains the nearly optimal scaling $\kappa\left(\frac{\kappa}{\epsilon}\right)^{o(1)}$ as desired.

By measuring the output state, the present disclosure can estimate classical properties of the solution with lower κ-dependence than recent results in the state-of-the-art based on random sampling. However, the algorithm 130 solves a stronger or more complex problem that produces a quantum state encoding the solution, which can be more useful when linear system solvers are invoked as a subroutine by other quantum algorithms such as those for differential equations and eigenvalue processing.

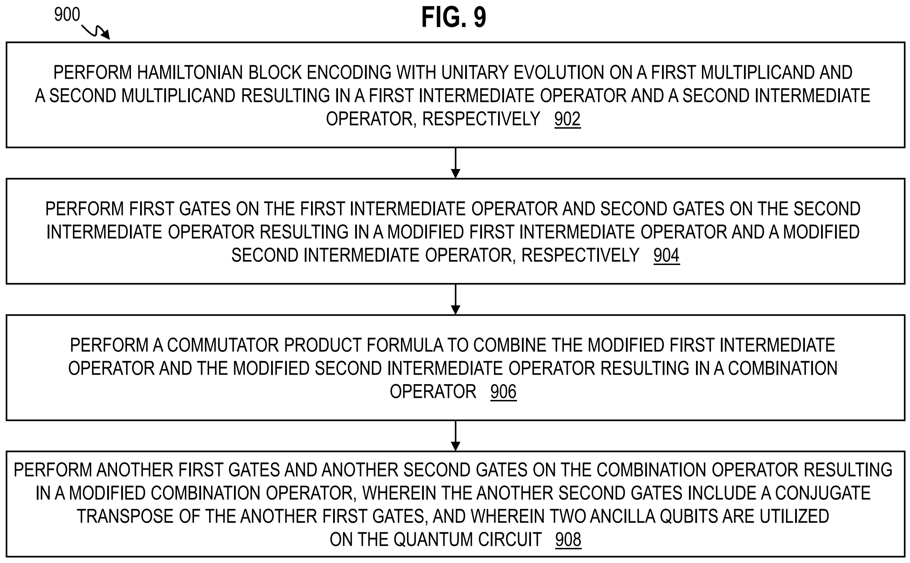

FIG. 9 depicts a flowchart of a computer-implemented method 900 for reducing qubits 14 in the quantum circuit 12 used in multiplying matrices with Hamiltonian evolution, thereby reducing the number of qubits 14 used in the quantum computer 10, according to one or more embodiments. The algorithms 130 include the procedure of the computer-implemented method 900, which causes execution on the qubits 14 of the quantum circuit 12 by controlling the qubits 14 according to the procedure. Reference can be made to any of the figures discussed herein.

At block 902, the method 900 includes performing Hamiltonian block encoding with unitary evolution on a first multiplicand (e.g., matrix A) and a second multiplicand (e.g., matrix B) resulting in a first intermediate operator (e.g., intermediate operator $U_A$) and a second intermediate operator (e.g., intermediate operator $U_B$), respectively. At block 904, the method 900 includes performing first gates (e.g., the identity gates, Pauli-X gates (X), projection operator (|0⟩⟨0|), and projection operator (|1⟩⟨1|)) on the first intermediate operator (e.g., intermediate operator $U_A$) and second gates (e.g., SWAP gates, projection operator (|0⟩⟨0|), projection operator (|1⟩⟨1|), identity gates (I)) on the second intermediate operator resulting in a modified first intermediate operator (e.g., intermediate operator $V_A$) and a modified second intermediate operator (e.g., intermediate operator $V_B$), respectively. At block 906, the method 900 includes performing a commutator product formula to combine the modified first intermediate operator and the modified second intermediate operator resulting in a combination operator (e.g., combination operator $V_{AB}$). At block 908, the method 900 includes performing another first gates (e.g., identity gate ($I$), the transpose of phase gate ($S^\dagger$), and the transpose of cyclic shift gate ($X^\dagger_{\mathbb{C}^2 \otimes \mathbb{C}^2}$) and another second gates (e.g., the identity gate (I), phase gate (S), and the cyclic shift gate ($X_{\mathbb{C}^2 \otimes \mathbb{C}^2}$)) on the combination operator (e.g., combination operator $V_{AB}$) resulting in a modified combination operator (e.g., combination operator $U_{AB}$), wherein the another second gates include a conjugate transpose of the another first gates, and wherein two ancilla qubits (e.g., ancilla qubits 1 and 2) are utilized on the quantum circuit 12.

Performing the Hamiltonian block encoding with unitary evolution comprises execution on one of the two ancilla qubits (e.g., ancilla qubit 1). Performing the commutator product formula comprises execution on both of the two ancilla qubits (e.g., ancilla qubits 1 and 2). Performing the first gates and the second gates on the combination operator comprises execution on both of the two ancilla qubits (e.g., ancilla qubits 1 and 2). The first gates comprise Paul-X gates and the second gates comprise SWAP gates.

The performing the commutator product formula comprises execution on both of the two ancilla qubits (e.g., ancilla qubits 1 and 2). The first another first gates comprise phase gate and cyclic shift gate, and the another second gates comprise a conjugate transpose of the phase gate and a conjugate transpose of the cyclic shift gate. Performing the Hamiltonian block encoding with unitary evolution comprises performing Hermitian dilation on the first multiplicand and the second multiplicand.

The quantum circuit comprises a plurality of qubits and the procedure employs a quantum instruction set architecture to execute on the plurality of qubits of the quantum circuit; the procedure is configured to utilize data qubits of the plurality of qubits in accordance with the quantum instruction set architecture and the two ancilla qubits of the plurality of qubits, the procedure being configured such that a number of the two ancilla qubits remains constant and does not increase in response to an increase in a number of multiplicands.

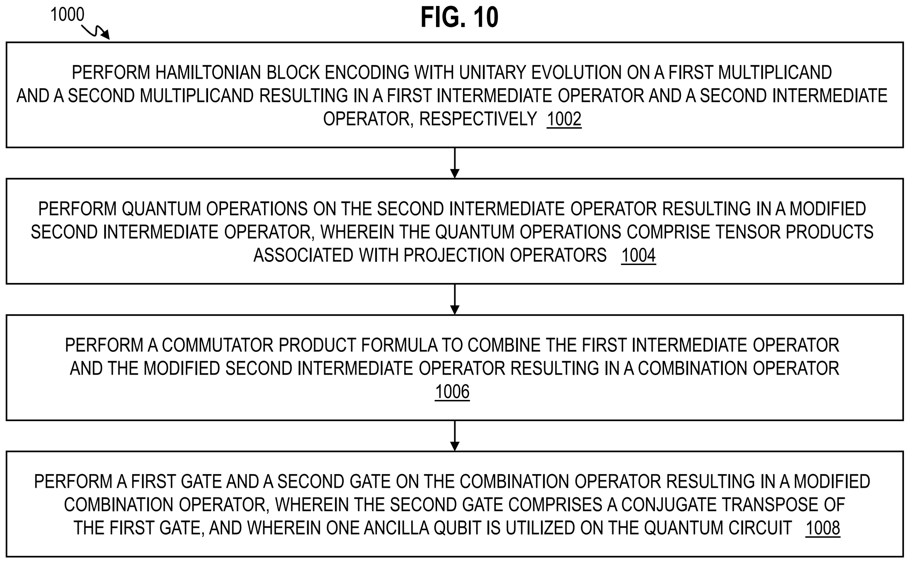

FIG. 10 depicts a flowchart of a computer-implemented method 1000 for reducing qubits 14 in the quantum circuit 12 used in multiplying matrices with Hamiltonian evolution, thereby reducing the number of qubits 14 used in the quantum computer 10, according to one or more embodiments. The algorithms 130 include the procedure of the computer-implemented method 1000, which causes execution on the qubits 14 of the quantum circuit 12 by controlling the qubits 14 according to the procedure. Reference can be made to any of the figures discussed herein.

At block 1002, the method 1000 includes performing Hamiltonian block encoding with unitary evolution on a first multiplicand (e.g., matrix A that is Hermitian) and a second multiplicand (e.g., matrix B) resulting in a first intermediate operator (e.g., intermediate operator $U_A$) and a second intermediate operator (e.g., intermediate operator $U_B$), respectively. At block 1004, the method 1000 includes performing quantum operations on the second intermediate operator (e.g., intermediate operator $U_B$) resulting in a modified second intermediate operator (e.g., intermediate operator $V_B$), where the quantum operations comprise tensor products (and an identity gate (I)) associated with projection operators (e.g., projection operator ($|0\rangle\langle 0|$) and projection operator ($|1\rangle\langle 1|$)). At block 1006, the method 1000 includes performing a commutator product formula to combine the first intermediate operator (e.g., intermediate operator $U_A$) and the modified second intermediate operator (e.g., intermediate operator $V_B$) resulting in a combination operator (e.g., combination operator $V_{AB}$). At block 1008, the method 1000 includes performing a first gate (e.g., phase gate (S)) and a second gate (e.g., transpose of the phase gate (S)) on the combination operator (e.g., combination operator $V_{AB}$) resulting in a modified combination operator (e.g., combination operator $U_{AB}$), where the second gate comprises a conjugate transpose of the first gate, and wherein one ancilla qubit is utilized on the quantum circuit.

Performing the Hamiltonian block encoding with unitary evolution comprises execution on the one ancilla qubit (e.g., ancilla 1). Performing the commutator product formula comprises execution on the one ancilla qubits (e.g., ancilla 1). The first gate comprises a phase gate and the second gate comprise a conjugate transpose on the phase gate.

The procedure employs a quantum instruction set architecture to execute on the plurality of qubits 14 of the quantum circuit 12; and the procedure is configured to utilize data qubits (e.g., system qubits) of the plurality of qubits 14 in accordance with the quantum instruction set architecture and the one ancilla qubit (e.g., ancilla 1) of the plurality of qubits, the procedure being configured such that a number of the one ancilla qubit (e.g., ancilla 1) remains constant and does not increase in response to an increase in a number of multiplicands.

Turning now to FIG. 4, a computer system 100 is generally shown in accordance with one or more embodiments of the invention. The computer system 100 can be an electronic, computer framework comprising and/or employing any number and combination of computing devices and networks utilizing various communication technologies, as described herein. The computer system 100 can be easily scalable, extensible, and modular, with the ability to change to different services or reconfigure some features independently of others. The computer system 100 may be, for example, a server, desktop computer, laptop computer, tablet computer, or smartphone. In some examples, computer system 100 may be a cloud computing node. Computer system 100 may be described in the general context of computer system executable instructions, such as program modules, being executed by a computer system. Generally, program modules may include routines, programs, objects, components, logic, data structures, and so on that perform particular tasks or implement particular abstract data types. Computer system 100 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 4 the computer system 100 has one or more central processing units (CPU(s)) 101a, 101b, 101c, etc., (collectively or generically referred to as processor(s) 101). The processors 101 can be a single-core processor, multi-core processor, computing cluster, or any number of other configurations. The processors 101, also referred to as processing circuits, are coupled via a system bus 102 to a system memory 103 and various other components. The system memory 103 can include a read only memory (ROM) 104 and a random access memory (RAM) 105. The ROM 104 is coupled to the system bus 102 and may include a basic input/output system (BIOS) or its successors like Unified Extensible Firmware Interface (UEFI), which controls certain basic functions of the computer system 100. The RAM is read-write memory coupled to the system bus 102 for use by the processors 101. The system memory 103 provides temporary memory space for operations of said instructions during operation. The system memory 103 can include random access memory (RAM), read only memory, flash memory, or any other suitable memory systems.

The computer system 100 comprises an input/output (I/O) adapter 106 and a communications adapter 107 coupled to the system bus 102. The I/O adapter 106 may be a small computer system interface (SCSI) adapter that communicates with a hard disk 108 and/or any other similar component. The I/O adapter 106 and the hard disk 108 are collectively referred to herein as a mass storage 110.

Software 111 for execution on the computer system 100 may be stored in the mass storage 110. The mass storage 110 is an example of a tangible storage medium readable by the processors 101, where the software 111 is stored as instructions for execution by the processors 101 to cause the computer system 100 to operate, such as is described herein below with respect to the various Figures. Examples of computer program product and the execution of such instruction is discussed herein in more detail. The communications adapter 107 interconnects the system bus 102 with a network 112, which may be an outside network, enabling the computer system 100 to communicate with other such systems. In one embodiment, a portion of the system memory 103 and the mass storage 110 collectively store an operating system, which may be any appropriate operating system to coordinate the functions of the various components shown in FIG. 4.

Additional input/output devices are shown as connected to the system bus 102 via a display adapter 115 and an interface adapter 116. In one embodiment, the adapters 106, 107, 115, and 116 may be connected to one or more I/O buses that are connected to the system bus 102 via an intermediate bus bridge (not shown). A display 119 (e.g., a screen or a display monitor) is connected to the system bus 102 by the display adapter 115, which may include a graphics controller to improve the performance of graphics intensive applications and a video controller. A keyboard 121, a mouse 122, a speaker 123, a microphone 124, etc., can be interconnected to the system bus 102 via the interface adapter 116, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI) and the Peripheral Component Interconnect Express (PCIe). Thus, as configured in FIG. 4, the computer system 100 includes processing capability in the form of the processors 101, storage capability including the system memory 103 and the mass storage 110, input means such as the keyboard 121, the mouse 122, and the microphone 124, and output capability including the speaker 123 and the display 119.

In some embodiments, the communications adapter 107 can transmit data using any suitable interface or protocol, such as the internet small computer system interface, among others. The network 112 may be a cellular network, a radio network, a wide area network (WAN), a local area network (LAN), or the Internet, among others. An external computing device may connect to the computer system 100 through the network 112. In some examples, an external computing device may be an external webserver or a cloud computing node.

It is to be understood that the block diagram of FIG. 4 is not intended to indicate that the computer system 100 is to include all of the components shown in FIG. 4. Rather, the computer system 100 can include any appropriate fewer or additional components not illustrated in FIG. 4 (e.g., additional memory components, embedded controllers, modules, additional network interfaces, etc.). Further, the embodiments described herein with respect to computer system 100 may be implemented with any appropriate logic, wherein the logic, as referred to herein, can include any suitable hardware (e.g., a processor, an embedded controller, or an application specific integrated circuit, among others), software (e.g., an application, among others), firmware, or any suitable combination of hardware, software, and firmware, in various embodiments.

The present disclosure is supplemented by the following examples.

Example 1: A method for a procedure for operating a quantum circuit, the method comprising: performing a Hamiltonian block encoding with unitary evolution on a first multiplicand and a second multiplicand resulting in a first intermediate operator and a second intermediate operator, respectively; performing first gates on the first intermediate operator and second gates on the second intermediate operator resulting in a modified first intermediate operator and a modified second intermediate operator, respectively; performing a commutator product formula to combine the modified first intermediate operator and the modified second intermediate operator resulting in a combination operator; and performing another first gates and another second gates on the combination operator resulting in a modified combination operator, wherein the another second gates include a conjugate transpose of the another first gates, and wherein two ancilla qubits are utilized on the quantum circuit.

Example 2: The method of Example 1, wherein the performing the Hamiltonian block encoding with unitary evolution comprises execution on one of the two ancilla qubits.

Example 3: The method of Example 1, wherein the performing the commutator product formula comprises execution on both of the two ancilla qubits.

Example 4: The method of Example 1, wherein the performing the first gates and the second gates on the combination operator comprises execution on both of the two ancilla qubits.

Example 5: The method of Example 1, wherein the first gates comprise Paul-X gates and the second gates comprise SWAP gates.

Example 6: The method of Example 1, wherein the performing the commutator product formula comprises execution on both of the two ancilla qubits.

Example 7: The method of Example 1, wherein: the another first gates comprise phase gate and cyclic shift gate; and the another second gates comprise a conjugate transpose of the phase gate and a conjugate transpose of the cyclic shift gate.

Example 8: The method of Example 1, wherein the performing the Hamiltonian block encoding with unitary evolution comprises performing Hermitian dilation on the first multiplicand and the second multiplicand.

Example 9: The method of Example 1, wherein: the quantum circuit comprises a plurality of qubits; the procedure employs a quantum instruction set architecture to execute on the plurality of qubits of the quantum circuit; and the procedure is configured to utilize data qubits of the plurality of qubits and the two ancilla qubits of the plurality of qubits in accordance with the quantum instruction set architecture, the procedure being configured such that a number of the two ancilla qubits remains constant and does not increase in response to an increase in a number of multiplicands.

Example 10: A system comprising: a quantum circuit comprising a plurality of qubits, the quantum circuit being controlled to execute a procedure for operating the quantum circuit, the procedure comprising: performing a Hamiltonian block encoding with unitary evolution on a first multiplicand and a second multiplicand resulting in a first intermediate operator and a second intermediate operator, respectively; performing first gates on the first intermediate operator and second gates on the second intermediate operator resulting in a modified first intermediate operator and a modified second intermediate operator, respectively; performing a commutator product formula to combine the modified first intermediate operator and the modified second intermediate operator resulting in a combination operator; and performing another first gates and another second gates on the combination operator resulting in a modified combination operator, wherein the another second gates include a conjugate transpose of the another first gates, and wherein two ancilla qubits of the plurality of qubits are utilized on the quantum circuit.

Example 11: The system of Example 10, wherein the performing the Hamiltonian block encoding with unitary evolution comprises execution on one of the two ancilla qubits.

Example 12: The system of Example 10, wherein the performing the commutator product formula comprises execution on both of the two ancilla qubits.

Example 13: The system of Example 10, wherein: the performing the first gates and the second gates on the combination operator comprises execution on both of the two ancilla qubits; and the first gates comprise Paul-X gates and the second gates comprise SWAP gates.

Example 14: The system of Example 10, wherein: the performing the commutator product formula comprises execution on both of the two ancilla qubits; the another first gates comprise phase gate and cyclic shift gate; and the another second gates comprise a conjugate transpose of the phase gate and a conjugate transpose of the cyclic shift gate.

Example 15: The system of Example 10, wherein the performing the Hamiltonian block encoding with unitary evolution comprises performing Hermitian dilation on the first multiplicand and the second multiplicand.

Example 16: The system of Example 10, wherein: the procedure employs a quantum instruction set architecture to execute on the plurality of qubits of the quantum circuit; and the procedure is configured to utilize data qubits of the plurality of qubits and the two ancilla qubits of the plurality of qubits in accordance with the quantum instruction set architecture, the procedure being configured such that a number of the two ancilla qubits remains constant and does not increase in response to an increase in a number of multiplicands.

Example 17: A method for a procedure for operating a quantum circuit, the method comprising: performing a Hamiltonian block encoding with unitary evolution on a first multiplicand and a second multiplicand resulting in a first intermediate operator and a second intermediate operator, respectively; performing quantum operations on the second intermediate operator resulting in a modified second intermediate operator, wherein the quantum operations comprise tensor products associated with projection operators; performing a commutator product formula to combine the first intermediate operator and the modified second intermediate operator resulting in a combination operator; and performing a first gate and a second gate on the combination operator resulting in a modified combination operator, wherein the second gate comprises a conjugate transpose of the first gate, and wherein one ancilla qubit is utilized on the quantum circuit.

Example 18: The method of Example 17, wherein: the performing the Hamiltonian block encoding with unitary evolution comprises execution on the one ancilla qubit; and the performing the commutator product formula comprises execution on the one ancilla qubit.

Example 19: The method of Example 17, wherein the first gate comprises a phase gate and the second gate comprise a conjugate transpose on the phase gate.

Example 20: The method of Example 17, wherein the procedure employs a quantum instruction set architecture to execute on a plurality of qubits of the quantum circuit; and the procedure is configured to utilize data qubits of the plurality of qubits and the one ancilla qubit of the plurality of qubits in accordance with the quantum instruction set architecture, the procedure being configured such that a number of the one ancilla qubit remains constant and does not increase in response to an increase in a number of multiplicands.

Therefore aspects of the disclosure include a procedure for operating a quantum circuit. Aspects include performing Hamiltonian block encoding with unitary evolution on a first multiplicand and a second multiplicand resulting in a first intermediate operator and a second intermediate operator, respectively. Aspects include performing first gates on the first intermediate operator and second gates on the second intermediate operator resulting in a modified first intermediate operator and a modified second intermediate operator, respectively. Aspects include performing a commutator product formula to combine the modified first intermediate operator and the modified second intermediate operator resulting in a combination operator, and performing another first gates and another second gates on the combination operator resulting in a modified combination operator. The another second gates include a conjugate transpose of the another first gates. Two ancilla qubits are utilized on the quantum circuit.

While the disclosure has been described with reference to various embodiments, it will be understood by those skilled in the art that changes may be made and equivalents may be substituted for elements thereof without departing from its scope. The various tasks and process steps described herein can be incorporated into a more comprehensive procedure or process having additional steps or functionality not described in detail herein. In addition, many modifications may be made to adapt a particular situation or material to the teachings of the disclosure without departing from the essential scope thereof. Therefore, it is intended that the present disclosure not be limited to the particular embodiments disclosed, but will include all embodiments falling within the scope thereof.

Unless defined otherwise, technical and scientific terms used herein have the same meaning as is commonly understood by one of skill in the art to which this disclosure belongs.

Various embodiments of the invention are described herein with reference to the related drawings. The drawings depicted herein are illustrative. There can be many variations to the diagrams and/or the steps (or operations) described therein without departing from the disclosure. For instance, the actions can be performed in a differing order or actions can be added, deleted or modified. All of these variations are considered a part of the present disclosure.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. The term "or" means "and/or" unless clearly indicated otherwise by context.

The terms "received from", "receiving from", "passed to", "passing to", etc. describe a communication path between two elements and does not imply a direct connection between the elements with no intervening elements/connections therebetween unless specified. A respective communication path can be a direct or indirect communication path.

The corresponding structures, materials, acts, and equivalents of all means or step plus function elements in the claims below are intended to include any structure, material, or act for performing the function in combination with other claimed elements as specifically claimed.

For the sake of brevity, conventional techniques related to making and using aspects of the invention may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

The present invention may be a system, a method, and/or a computer program product at any possible technical detail level of integration. The computer program product may include a computer readable storage medium (or media) having computer readable program instructions thereon for causing a processor to carry out aspects of the present invention.

Various embodiments are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments described herein have been presented for purposes of illustration, but are not intended to be exhaustive or limited to the form(s) disclosed. The embodiments were chosen and described in order to best explain the principles of the disclosure. Many modifications and variations will be apparent to those of ordinary skill in the art without departing from the scope of the described embodiments. The terminology used herein was chosen to best explain the principles of the various embodiments, the practical application or technical improvement over technologies found in the marketplace, or to enable others of ordinary skill in the art to understand the embodiments described herein.

**Claims**

1. A method (500, 900) for a procedure for operating a quantum circuit (12), the method comprising:

   performing (502, 902) a Hamiltonian block encoding with unitary evolution on a first multiplicand and a second multiplicand resulting in a first intermediate operator and a second intermediate operator, respectively;
   performing (504A, 504B, 904) first gates on the first intermediate operator and second gates on the second intermediate operator resulting in a modified first intermediate operator and a modified second intermediate operator, respectively;
   performing (506, 906) a commutator product formula to combine the modified first intermediate operator and the modified second intermediate operator resulting in a combination operator; and
   performing (508, 908) another first gates and another second gates on the combination operator resulting in a modified combination operator, wherein the another second gates include a conjugate transpose of the another first gates, and wherein two ancilla qubits are utilized on the quantum circuit.

2. The method of claim 1, wherein the performing the Hamiltonian block encoding with unitary evolution comprises execution on one of the two ancilla qubits.

3. The method of claim 1 or claim 2, wherein the performing the commutator product formula comprises execution on both of the two ancilla qubits.

4. The method of any preceding claim, wherein the performing the first gates and the second gates on the combination operator comprises execution on both of the two ancilla qubits.

5. The method of any preceding claim, wherein the first gates comprise Paul-X gates and the second gates comprise SWAP gates.

6. The method of any preceding claim , wherein:

the another first gates comprise phase gate and cyclic shift gate; and
the another second gates comprise a conjugate transpose of the phase gate and a conjugate transpose of the cyclic shift gate.

7. The method of any preceding claim, wherein the performing the Hamiltonian block encoding with unitary evolution comprises performing Hermitian dilation on the first multiplicand and the second multiplicand.

8. The method of any preceding claim, wherein:

the quantum circuit comprises a plurality of qubits;
the procedure employs a quantum instruction set architecture to execute on the plurality of qubits of the quantum circuit; and
the procedure is configured to utilize data qubits of the plurality of qubits and the two ancilla qubits of the plurality of qubits in accordance with the quantum instruction set architecture, the procedure being configured such that a number of the two ancilla qubits remains constant and does not increase in response to an increase in a number of multiplicands.

9. A system (10) comprising:
a quantum circuit (12) comprising a plurality of qubits (14), the quantum circuit being controlled to execute a procedure (500, 900) for operating the quantum circuit (12), the procedure comprising:

performing (502, 902) a Hamiltonian block encoding with unitary evolution on a first multiplicand and a second multiplicand resulting in a first intermediate operator and a second intermediate operator, respectively;
performing (504A, 504B, 904) first gates on the first intermediate operator and second gates on the second intermediate operator resulting in a modified first intermediate operator and a modified second intermediate operator, respectively;
performing (506, 906) a commutator product formula to combine the modified first intermediate operator and the modified second intermediate operator resulting in a combination operator; and
performing (508, 908) another first gates and another second gates on the combination operator resulting in a modified combination operator, wherein the another second gates include a conjugate transpose of the another first gates, and wherein two ancilla qubits of the plurality of qubits are utilized on the quantum circuit.

10. The system of claim 9, wherein the performing the Hamiltonian block encoding with unitary evolution comprises execution on one of the two ancilla qubits.

11. The system of claim 9 or claim 10, wherein the performing the commutator product formula comprises execution on both of the two ancilla qubits.

12. A method (1000) for a procedure for operating a quantum circuit (12), the method comprising:

performing (702A, 702B, 1002) a Hamiltonian block encoding with unitary evolution on a first multiplicand and a second multiplicand resulting in a first intermediate operator and a second intermediate operator, respectively;
performing (704, 1004) quantum operations on the second intermediate operator resulting in a modified second intermediate operator, wherein the quantum operations comprise tensor products associated with projection operators;
performing (706, 1006) a commutator product formula to combine the first intermediate operator and the modified second intermediate operator resulting in a combination operator; and
performing (708, 1008) a first gate and a second gate on the combination operator resulting in a modified combination operator, wherein the second gate comprises a conjugate transpose of the first gate, and wherein one ancilla qubit is utilized on the quantum circuit.

13. The method of claim 12, wherein:

the performing the Hamiltonian block encoding with unitary evolution comprises execution on the one ancilla qubit; and

the performing the commutator product formula comprises execution on the one ancilla qubit.

14. The method of claim 12 or claim 13, wherein the first gate comprises a phase gate and the second gate comprise a conjugate transpose on the phase gate.

15. The method of any of claims 12 to 14, wherein the procedure employs a quantum instruction set architecture to execute on a plurality of qubits of the quantum circuit; and

the procedure is configured to utilize data qubits of the plurality of qubits and the one ancilla qubit of the plurality of qubits in accordance with the quantum instruction set architecture, the procedure being configured such that a number of the one ancilla qubit remains constant and does not increase in response to an increase in a number of multiplicands.

**FIG. 1**

10

12 — 14A 14B 14C 14D 14E 14F 14G ••• 14N

32 — 34 36 34 36 34 36 34 36 34 36 34 36 34 36 34 36

CONTROLLER 18A

22A

DATA 26A

INSTRUCTIONS 130 24A

20A

28

30

COMPUTER 100

SOFTWARE 111

ALGORITHM(S) 130

EP 4 764 971 A1

*FIG. 3*

*FIG. 2*

FIG. 4

EP 4 764 971 A1

FIG. 5

500

START

Input $U_A = \exp\left(-i\tau \begin{bmatrix} 0 & A \\ A^\dagger & 0 \end{bmatrix}\right)$

Input $U_B = \exp\left(-i\tau \begin{bmatrix} 0 & B \\ B^\dagger & 0 \end{bmatrix}\right)$

502

504A

Construct $V_A = (I \otimes X)$
$\cdot (|0\rangle\langle 0| \otimes U_A + |1\rangle\langle 1| \otimes I)$
$\cdot (I \otimes X)$

504B

Construct $V_B = $ SWAP
$\cdot (|0\rangle\langle 0| \otimes U_B + |1\rangle\langle 1| \otimes I)$
$\cdot$ SWAP

Construct
$V_{AB} = V_A V_B V_A^\dagger V_B^\dagger$

506

Perform $\left(I \otimes S^\dagger\right) X_{\mathbb{C}^2 \otimes \mathbb{C}^2}^\dagger \cdot V_{AB} \cdot X_{\mathbb{C}^2 \otimes \mathbb{C}^2} (I \otimes S)$
$\approx |0\rangle\langle 0| \otimes U_{AB} + |1\rangle\langle 1| \otimes I$

508

OUTPUT/MEASURE $U_{AB}$

510

EP 4 764 971 A1

EP 4 764 971 A1

## FIG. 6A

$$U_A \quad = \quad \exp\left(-i\tau \begin{bmatrix} 0 & A \\ A^\dagger & 0 \end{bmatrix}\right)$$

## FIG. 6B

$$U_B \quad = \quad \exp\left(-i\tau \begin{bmatrix} 0 & B \\ B^\dagger & 0 \end{bmatrix}\right)$$

FIG. 6C

EP 4 764 971 A1

FIG. 6D

EP 4 764 971 A1

**FIG. 6E**

**FIG. 6F**

# FIG. 7

$700$

**START**

702A — Input $U_A = \exp\left(-i\tau \begin{bmatrix} 0 & A \\ A^\dagger & 0 \end{bmatrix}\right)$

702B — Input $\exp\left(-i\tau B\right)$

704 — Construct $V_B = |0\rangle\langle 0| \otimes I + |1\rangle\langle 1| \otimes \exp\left(-i\tau B\right)$

706 — Construct $V_{AB} = U_A V_B U_A^\dagger V_B^\dagger$

708 — Perform $S^\dagger \cdot V_{AB} \cdot S \approx U_{AB}$

710 — OUTPUT/MEASURE $U_{AB}$

FIG. 8A

$$\text{anc}_1 \quad \boxed{U_A} \quad = \quad \text{anc}_1 \quad \boxed{\exp\left(-i\tau \begin{bmatrix} 0 & A \\ A^\dagger & 0 \end{bmatrix}\right)}$$

FIG. 8B

$$\text{anc}_1 \quad \boxed{V_B} \quad = \quad \exp(-i\tau B)$$

EP 4 764 971 A1

**FIG. 8C**

**FIG. 8D**

# FIG. 9

900

EP 4 764 971 A1

PERFORM HAMILTONIAN BLOCK ENCODING WITH UNITARY EVOLUTION ON A FIRST MULTIPLICAND AND A SECOND MULTIPLICAND RESULTING IN A FIRST INTERMEDIATE OPERATOR AND A SECOND INTERMEDIATE OPERATOR, RESPECTIVELY   902

PERFORM FIRST GATES ON THE FIRST INTERMEDIATE OPERATOR AND SECOND GATES ON THE SECOND INTERMEDIATE OPERATOR RESULTING IN A MODIFIED FIRST INTERMEDIATE OPERATOR AND A MODIFIED SECOND INTERMEDIATE OPERATOR, RESPECTIVELY   904

PERFORM A COMMUTATOR PRODUCT FORMULA TO COMBINE THE MODIFIED FIRST INTERMEDIATE OPERATOR AND THE MODIFIED SECOND INTERMEDIATE OPERATOR RESULTING IN A COMBINATION OPERATOR   906

PERFORM ANOTHER FIRST GATES AND ANOTHER SECOND GATES ON THE COMBINATION OPERATOR RESULTING IN A MODIFIED COMBINATION OPERATOR, WHEREIN THE ANOTHER SECOND GATES INCLUDE A CONJUGATE TRANSPOSE OF THE ANOTHER FIRST GATES, AND WHEREIN TWO ANCILLA QUBITS ARE UTILIZED ON THE QUANTUM CIRCUIT   908

# FIG. 10

1000

PERFORM HAMILTONIAN BLOCK ENCODING WITH UNITARY EVOLUTION ON A FIRST MULTIPLICAND AND A SECOND MULTIPLICAND RESULTING IN A FIRST INTERMEDIATE OPERATOR AND A SECOND INTERMEDIATE OPERATOR, RESPECTIVELY 1002

PERFORM QUANTUM OPERATIONS ON THE SECOND INTERMEDIATE OPERATOR RESULTING IN A MODIFIED SECOND INTERMEDIATE OPERATOR, WHEREIN THE QUANTUM OPERATIONS COMPRISE TENSOR PRODUCTS ASSOCIATED WITH PROJECTION OPERATORS 1004

PERFORM A COMMUTATOR PRODUCT FORMULA TO COMBINE THE FIRST INTERMEDIATE OPERATOR AND THE MODIFIED SECOND INTERMEDIATE OPERATOR RESULTING IN A COMBINATION OPERATOR 1006

PERFORM A FIRST GATE AND A SECOND GATE ON THE COMBINATION OPERATOR RESULTING IN A MODIFIED COMBINATION OPERATOR, WHEREIN THE SECOND GATE COMPRISES A CONJUGATE TRANSPOSE OF THE FIRST GATE, AND WHEREIN ONE ANCILLA QUBIT IS UTILIZED ON THE QUANTUM CIRCUIT 1008

**EUROPEAN SEARCH REPORT**

Application Number

EP 25 22 1987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTINA NIBBI ET AL: "Block encoding of matrix product operators", ARXIV.ORG CORNELL UNIVERSITY LIBRARY, 201 OLIN LIBRARY CORNELL UNIVERSITY ITHACA, NY 14853, 24 October 2024 (2024-10-24), XP091896664, DOI: 10.1103/PHYSREVA.110.042427 * sections II-IV; page 24 - page 31; figure 3 * ----- | 1-15 | INV. G06N10/20 G06N10/60 G06F17/16 |
| X,P | Kang Christopher ET AL: "Quantum matrix arithmetics with Hamiltonian evolution", arXiv.org, 7 October 2025 (2025-10-07), pages 1-94, XP093391751, Retrieved from the Internet: URL:https://arxiv.org/pdf/2510.06316v1 * page 24 - page 31 * ----- | 1-15 | |

TECHNICAL FIELDS
SEARCHED (IPC)

G06N
G06F

The present search report has been drawn up for all claims

| Place of search | Date of completion of the search | Examiner |
|---|---|---|
| The Hague | 30 April 2026 | Keane, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)